(19) **Europäisches Patentamt European Patent Office Office européen des brevets**

(11) **EP 2 444 144 B1**

(12) **EUROPEAN PATENT SPECIFICATION**

(45) Date of publication and mention of the grant of the patent:
**03.10.2018 Bulletin 2018/40**

(51) Int Cl.:
**B01D 53/86** (2006.01)       **B01D 53/64** (2006.01)

(21) Application number: **09846164.3**

(22) Date of filing: **17.06.2009**

(86) International application number:
**PCT/JP2009/061028**

(87) International publication number:
**WO 2010/146671 (23.12.2010 Gazette 2010/51)**

(54) **SYSTEM FOR REMOVING MERCURY AND METHOD OF REMOVING MERCURY FROM MERCURY-CONTAINING HIGH-TEMPERATURE DISCHARGE GAS**

SYSTEM ZUR ENTFERNUNG VON QUECKSILBER UND VERFAHREN ZUR ENTFERNUNG VON QUECKSILBER AUS QUECKSILBERHALTIGEM HOCHTEMPERATURABGAS

SYSTÈME ET PROCÉDÉ D'ÉLIMINATION DU MERCURE DE GAZ DE COMBUSTION À HAUTE TEMPÉRATURE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**25.04.2012 Bulletin 2012/17**

(73) Proprietor: **Mitsubishi Hitachi Power Systems, Ltd.**
**Yokohama 220-8401 (JP)**

(72) Inventors:
• **UKAI, Nobuyuki**
  **Tokyo 108-8215 (JP)**
• **MURAKAMI, Moritoshi**
  **Tokyo 108-8215 (JP)**
• **OKINO, Susumu**
  **Tokyo 108-8215 (JP)**

• **NAGAYASU, Tatsuto**
  **Tokyo 108-8215 (JP)**
• **KAGAWA, Seiji**
  **Tokyo 108-8215 (JP)**

(74) Representative: **Studio Torta S.p.A.**
**Via Viotti, 9**
**10121 Torino (IT)**

(56) References cited:
WO-A1-2004/030827       FR-A1- 2 902 350
JP-A- 10 230 137        JP-A- 61 255 993
JP-A- 2001 141 193      JP-A- 2001 198 434
JP-A- 2007 167 743      JP-A- 2007 268 355
JP-A- 2008 221 087      JP-U- 62 044 052
US-A1- 2003 235 525

EP 2 444 144 B1

**Description**

TECHNICAL FIELD

The present invention relates to a mercury content reduction system and a mercury content reduction method of flue gas containing mercury that reduce the content of mercury in flue gas discharged from a boiler or the like.

BACKGROUND ART

In coal-fired flue gas and flue gas generated by burning heavy fuel oil may contain dust, sulfur oxide (SOx), and nitrogen oxide (NOx), as well as metallic mercury ($Hg^0$).

In recent years, various proposals have been made on methods and apparatuses for treating the metallic mercury, in combination with a denitration apparatus that reduces NOx and a wet desulfurization apparatus that uses an alkali absorbent as a SOx absorbent.

As a method for treating metallic mercury in flue gas, a system in which reduction denitration is carried out by spraying ammonium ($NH_3$) into a flue in the upstream process of a high-temperature denitration apparatus, and oxidizing (chlorinating) mercury on a denitration catalyst to be aqueous hydrogen chloride, by spraying a chlorinating agent such as hydrochloric acid (HCl), and then reducing mercury by a wet desulfurization apparatus installed in the downstream side has been proposed (for example, see Patent Document 1).

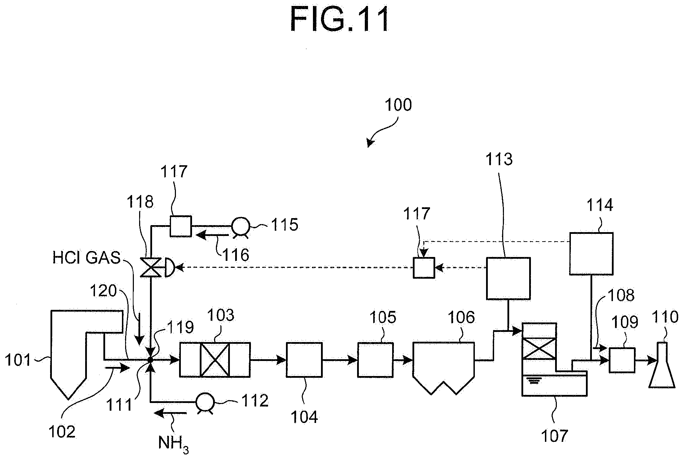

Fig. 11 is a schematic of a conventional flue gas control system including a mercury reduction system. As shown in Fig. 11, in a flue gas control system 100 including a mercury reduction system, flue gas 102 containing NOx and Hg discharged from a boiler 101 is supplied to a reduction denitration apparatus 103, in which NOx is reduced. The heat of the flue gas 102 is exchanged with air by an air heater 104, and the flue gas 102 is supplied to a dust collector 106, after the heat is collected by a heat collector 105. A desulfurization apparatus 107 reduces sulfur oxide in the flue gas 102, and discharges as purified gas 108. The gas is then heated by a reheater 109 and discharged from a stack 110.

An $NH_3$ injection spot 111 is provided upstream of the reduction denitration apparatus 103, and nitrogen oxide is reduced by $NH_3$ supplied from an $NH_3$ tank 112.

A hydrogen chloride concentration measuring unit 113 installed upstream of a denitration apparatus 107 in a flue measures the concentration of hydrogen chloride (HCl) used as a mercury chlorinating agent, and a mercury concentration measuring unit 114 installed downstream of the denitration apparatus 107 measures the concentration of mercury. Based on the measured concentration values of HCl and Hg, an arithmetic unit 117 calculates the supply of aqueous hydrogen chloride (HCl) solution 116 supplied from a hydrogen chloride solution tank 115. Based on the calculated initial concentration, a controlling unit 118 controls the supply of the evaporated hydrogen chloride (HCl gas) supplied into a flue 120 from the hydrogen chloride solution tank 115 through an HCl injection spot 119.

$NH_3$, urea (($NH_2)_2CO$), and the like are supplied as a reducing agent and HCl is supplied as a mercury chlorinating agent. Accordingly, on a denitration catalyst filled into the reduction denitration apparatus 103, $NH_3$ promotes the reduction reaction of nitrogen oxide NOx in the flue gas 102 as the following formula (1), and HCl promotes the oxidation reaction of Hg as the following formula (2).

$$4NO+4NH_3+O_2 \ 4N_2+6H_2O \qquad (1)$$

$$Hg+1/2O_2+2HCl \ HgCl_2+H_2O \qquad (2)$$

In the conventional method, the reducing agent and the mercury chlorinating agent are not only supplied in a gaseous state as $NH_3$ gas and HCl gas, but also supplied in a liquid state as an $NH_4Cl$ solution. When the agents are supplied in a liquid state as $NH_4Cl$ solution, $NH_4Cl$ is dissociated into $NH_3$ gas and HCl gas. Accordingly, $NH_3$ gas acts as a reducing agent and HCl gas acts as a mercury chlorinating agent.

[Patent Document 1] Japanese Patent Application Laid-open No. 10-230137
US 2003/0235525 and US 2007/0202020 disclose a method for the treatment of mercury present in exhaust gases.

DISCLOSURE OF INVENTION

PROBLEM TO BE SOLVED BY THE INVENTION

However, if the reducing agent and the mercury chlorinating agent are supplied in a gaseous state as $NH_3$ gas and HCl gas, there poses a problem that gas supply equipment such as a spraying nozzle is separately required for two systems. When the reducing agent and the mercury chlorinating agent are supplied in a liquid state as $NH_4Cl$ solution, if $NH_4Cl$ is dissociated, $NH_3$ gas and HCL gas generated from 1 mol of $NH_4Cl$ are 1 mol each. Accordingly, the generating

amount of $NH_3$ gas and HCl gas cannot be controlled. Consequently, if the required ratio of $NH_3$ and HCl is not one-to-one, due to the gaseous nature of NOx and metallic mercury $Hg^0$ in the flue gas, there poses a problem that at least one of $NH_3$ or HCl may exceed or fall short.

The present invention is made in view of the foregoing, and has an object to provide a mercury reduction system and a mercury reduction method of flue gas containing mercury that can simultaneously supply a reducing agent and a mercury chlorinating agent in any proportion with a simple device.

MEANS FOR SOLVING PROBLEM

According to the present invention, a mercury reduction system that reduces nitrogen oxide and mercury in flue gas discharged from a boiler includes: a chemical supplying unit that mixes a reducing agent for reducing nitrogen oxide in the flue gas on a denitration catalyst, a mercury chlorinating agent for oxidizing mercury in a presence of hydrogen chloride, and an oxidation-reduction agent for reducing nitrogen oxide in the flue gas on a denitration catalyst and for oxidizing mercury in the presence of hydrogen chloride, all in liquid states, and sprays a mixed solution into a flue of the boiler; a reduction denitration apparatus that includes a denitration catalyst for reducing nitrogen oxide in the flue gas with ammonia and for oxidizing mercury in the presence of hydrogen chloride; and a wet desulfurization apparatus that reduces a concentration of mercury oxidized in the reduction denitration apparatus with an alkali absorbent.

Advantageously, the chemical supplying unit comprises: an $NH_4Cl$ dissolving tank including a stirring unit for preparing an $NH_4Cl$ solution at a predetermined concentration; an $NH_3$ dissolving tank including a stirring unit for preparing an $NH_3$ solution at a constant concentration; an HCl dissolving tank including a stirring unit for preparing an HCl solution at a constant concentration; a mixed solution dissolving tank including a stirring unit for preparing the mixed solution from the $NH_4Cl$ solution supplied from the $NH_4Cl$ dissolving tank, the $NH_3$ solution supplied from the $NH_3$ dissolving tank, and the HCl solution supplied from the HCl dissolving tank; a plurality of adjusting valves for adjusting flow rates of the $NH_4Cl$ solution, the $NH_3$ solution, and the HCl solution, and the mixed solution, respectively; a plurality of flowmeters for measuring flow rates of the $NH_4Cl$ solution, the $NH_3$ solution, and the HCl solution, and the mixed solution, respectively; a flowmeter for measuring a flow rate of the mixed solution sprayed into the flue gas; a plurality of NOx concentration meters provided upstream and downstream of the reduction denitration apparatus for measuring a NOx concentration of the flue gas; a mercury concentration meter that measures mercury contained in the treatment gas discharged from the reduction denitration apparatus; an arithmetic apparatus configured to control the plurality of adjusting valves based on the measurements of the flowmeter, the plurality of NOx concentration meters, and the mercury concentration meter.

Preferably, in the mercury reduction system, the chemical supplying unit includes a chemical feed pipe that feeds the liquid materials into a flue in a liquid state, a blow pipe that is inserted into the flue so as to surround the chemical feed pipe, and has an injection hole used to inject air supplied therein into the flue, and an injection nozzle that is fitted to an end of the chemical feed pipe and through which the liquid materials are injected, and the liquid materials are sprayed into the flue accompanied with the air.

Preferably, in the mercury reduction system, the injection nozzle is a two-fluid nozzle through which the liquid materials and the air for spraying the liquid materials are injected.

Preferably, in the mercury reduction system, the chemical supplying unit includes an oxidation-reduction agent feed pipe through which the oxidation-reduction agent is supplied into the flue in a liquid state, an air feed pipe that is inserted into the flue so as to surround the oxidation-reduction agent feed pipe and through which air for spraying the oxidation-reduction agent is supplied into the flue, and a two-fluid nozzle that is fixed to an end of the oxidation-reduction agent feed pipe and the air feed pipe, and through which the oxidation-reduction agent and the air are injected. The oxidation-reduction agent is sprayed into the flue accompanied with the air.

According to the present invention, a mercury reduction system that reduces nitrogen oxide and mercury in flue gas discharged from a boiler includes: a chemical supplying unit that mixes a reducing agent for reducing nitrogen oxide in the flue gas on a denitration catalyst, and a mercury chlorinating agent for oxidizing mercury in a presence of hydrogen chloride, all in gaseous states, and inject a mixed gas into a flue of the boiler; a reduction denitration apparatus that includes a denitration catalyst for reducing nitrogen oxide in the flue gas with ammonia and for oxidizing mercury in the presence of hydrogen chloride; and a wet desulfurization apparatus that reduces a concentration of mercury oxidized in the reduction denitration apparatus with an alkali absorbent.

The chemical supplying unit advantageously comprises an $NH_3$ gas feed pipe that supplies the $NH_3$ gas from an $NH_3$ gas supplying unit into the flue; an HCl gas feed pipe that connects between an HCl gas supplying unit and the $NH_3$ gas feed pipe; a plurality of adjusting valves for adjusting flow rates of the $NH_3$ gas and the HCl gas, and the mixed gas, respectively; a plurality of flowmeters for measuring flow rates of the $NH_3$ gas, the HCl gas, and the mixed gas, respectively; a flowmeter for measuring a flow rate of the mixed gas injected into the flue gas; a plurality of NOx concentration meters provided upstream and downstream of the reduction denitration apparatus for measuring a NOx concentration of the flue gas; a mercury concentration meter that measures mercury contained in the treatment gas discharged from the reduction denitration apparatus; an arithmetic apparatus configured to control the plurality of adjusting valves based on the measurements of the flowmeter , the plurality of NOx concentration meters, and the mercury concentration meter.

Preferably, in the mercury reduction system, temperature of the flue gas is equal to or more than 320°C and equal to or less than 420°C.

According to the present invention, a mercury reduction method of flue gas containing mercury for reducing nitrogen oxide and mercury in flue gas discharged from a boiler includes: a step of chemical supplying for mixing at least two or more of a reducing agent that reduces nitrogen oxide in the flue gas on a denitration catalyst, a mercury chlorinating agent that oxidizes mercury in a presence of hydrogen chloride, and an oxidation-reduction agent that reduces nitrogen oxide in the flue gas on a denitration catalyst and oxidizes mercury in the presence of hydrogen chloride, as in liquid states or all in gaseous states, and for supplying a resultant mix into a flue of the boiler; a step of reduction denitration treating for reducing nitrogen oxide in the flue gas on the denitration catalyst with ammonia and oxidizing mercury in the presence of hydrogen chloride; and a step of wet desulfurizing for reducing mercury oxidized at the step of reduction denitration treating with an alkali absorbent.

Preferably, in the mercury reduction method of flue gas containing mercury, the liquid materials are sprayed with a two-fluid nozzle at the step of chemical supplying. Preferably, the mercury reduction method of flue gas containing mercury further includes: a step of nitrogen oxide concentration measuring that is provided prior to and subsequent to the step of reduction denitration treating, and measures concentration of nitrogen oxide in the flue gas; and a step of mercury concentration measuring that is provided subsequent to the step of reduction denitration treating, and measures concentration of mercury in the flue gas. Concentrations of the liquid materials in the mixed solution are adjusted based on at least one of the concentration of nitrogen oxide in the flue gas obtained at the step of nitrogen oxide concentration measuring and the concentration of mercury in the flue gas obtained at the step of mercury concentration measuring, or both of them. Preferably, in the mercury reduction method of flue gas containing mercury, concentrations of the liquid materials in the mixed solution are measured, and supplies of the liquid materials are adjusted based on the concentrations of the liquid materials.

According to the present invention, a mercury reduction method of flue gas containing mercury for reducing nitrogen oxide and mercury in flue gas discharged from a boiler includes a step of chemical supplying for mixing a reducing agent that reduces nitrogen oxide in the flue gas on a denitration catalyst, a mercury chlorinating agent that oxidizes mercury in a presence of hydrogen chloride, all in gaseous states, and for supplying a resultant mix into a flue of the boiler; a step of reduction denitration treating for reducing nitrogen oxide in the flue gas on the denitration catalyst with ammonia and oxidizing mercury in the presence of hydrogen chloride; and a step of wet desulfurizing for reducing a concentration of mercury oxidized at the step of reduction denitration treating with an alkali absorbent..

EFFECT OF THE INVENTION

With the present invention, at least two or more of a reducing agent, a mercury chlorinating agent, and an oxidation-reduction agent can be mixed in liquid states or gaseous states, and supplied into a flue. Accordingly, the reducing agent and the mercury chlorinating agent can be simultaneously supplied to flue gas in any proportion with a simple device, based on the gaseous nature of the flue gas. Consequently, it is possible to enhance oxidation and reduction performances of mercury and nitrogen oxide in the flue gas.

BRIEF DESCRIPTION OF DRAWINGS

[Fig. 1] Fig. 1 is a schematic of a mercury reduction system according to a first embodiment of the present invention.
[Fig. 2] Fig. 2 is a schematic of a part of the structure of the mercury reduction system.
[Fig. 3] Fig. 3 is a schematic of relationship between the temperature of $NH_4Cl$ and the saturation concentration in water.
[Fig. 4] Fig. 4 is a schematic of flues in which a mixed solution feed pipe and an air feed pipe are inserted, and near the flues.
[Fig. 5] Fig. 5 is a partially enlarged sectional view of Fig. 4.
[Fig. 6] Fig. 6 is a partially enlarged sectional view of a blow pipe with an ordinary injection nozzle.
[Fig. 7] Fig. 7 is a schematic of another spraying method of $NH_4Cl$ solution with a two-fluid nozzle.
[Fig. 8] Fig. 8 is a schematic of a part of a mercury reduction system according to a second embodiment of the present invention.
[Fig. 9] Fig. 9 is a schematic of a mercury reduction system according to a third embodiment of the present invention.
[Fig. 10] Fig. 10 is a schematic of a part of the mercury reduction system.
[Fig. 11] Fig. 11 is a schematic of a conventional flue gas control system including a mercury reduction system.

BEST MODE(S) FOR CARRYING OUT THE INVENTION

[First Embodiment]

Exemplary embodiments of the present invention will be described in detail with reference to the accompanying drawings. However, the present invention is not limited by the embodiments. Constituting elements in the embodiments include elements that can be easily achieved by a person skilled in the art, or elements being substantially the same as those elements.

A mercury reduction system according to a first embodiment of the present invention will be described with reference to the accompanying drawings.

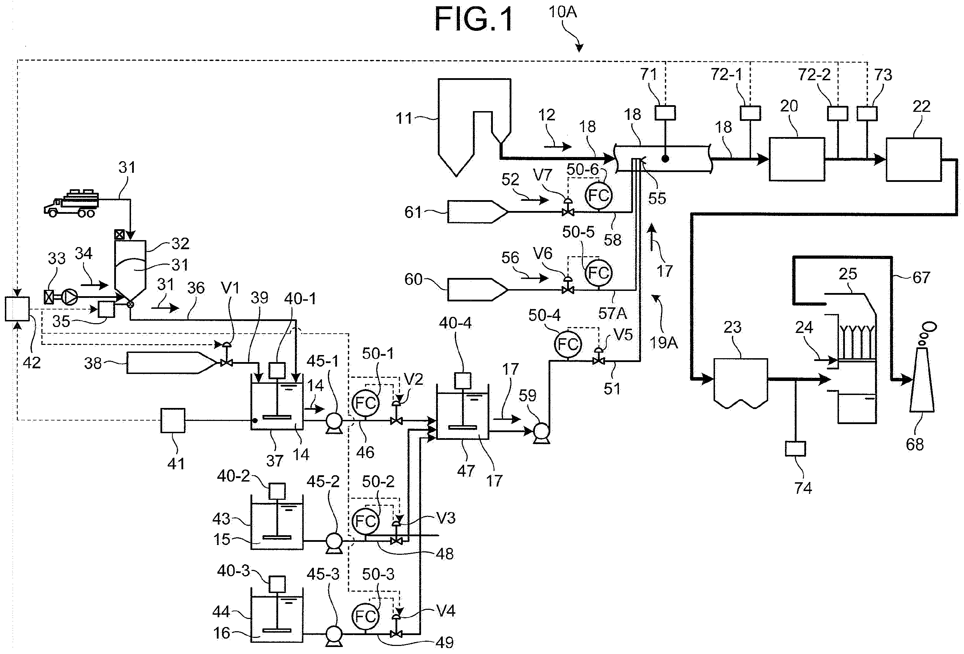

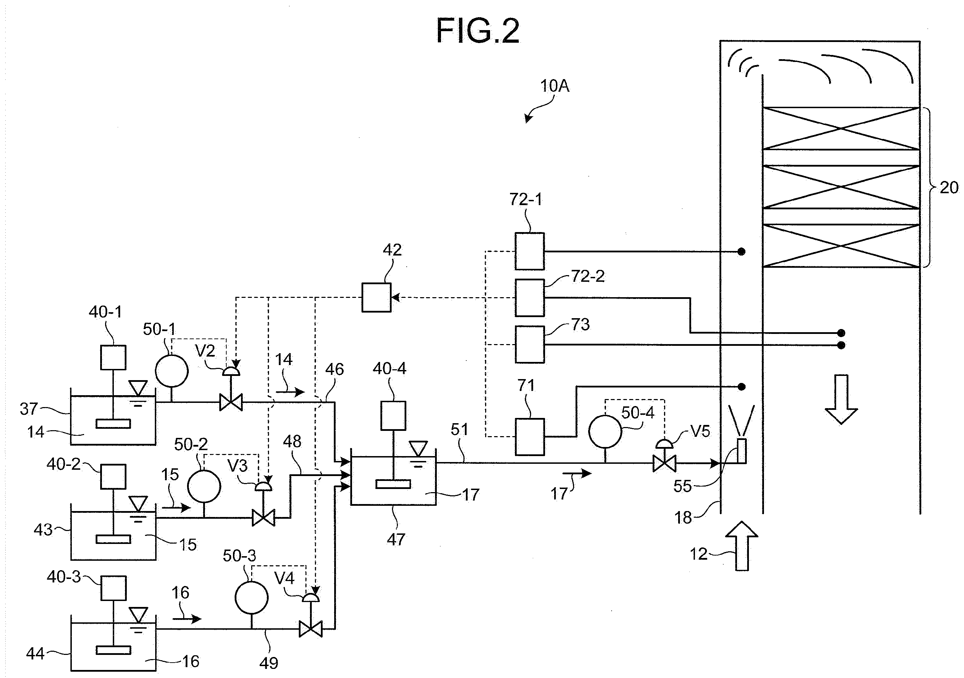

Fig. 1 is a schematic of the mercury reduction system according to the first embodiment of the present invention. Fig. 2 is a schematic of a part of the structure of the mercury reduction system.

As shown in Figs. 1 and 2, a mercury reduction system 10A according to the present embodiment is a mercury reduction system that reduces nitrogen oxide (NOx) and mercury (Hg) in flue gas 12 discharged from a boiler 11. The mercury reduction system 10A includes a chemical supplying unit 19A that mixes an ammonium chloride ($NH_4Cl$) solution 14 obtained by dissolving ammonium chloride ($NH_4Cl$) used as an oxidation-reduction agent, an ammonia ($NH_3$) solution 15 obtained by dissolving ammonia ($NH_3$) used as a reducing agent, and a hydrogen chloride (HCl) solution 16 obtained by dissolving hydrogen chloride (HCl) used as a mercury chlorinating agent in liquid states, and supplies a mixed solution 17 thereof into a flue 18 provided downstream of the boiler 11. The mercury reduction system 10A also includes a reduction denitration apparatus 20 that has a denitration catalyst reducing NOx in the flue gas 12 with $NH_3$ and oxidizing Hg in the presence of HCl, an air heater (APH) 22 that heat exchanges the denitrated flue gas 12, a dust collector 23 that reduces dust in the denitrated flue gas 12, and a wet desulfurization apparatus 25 that reduces Hg oxidized in the reduction denitration apparatus 20 with limestone-gypsum slurry 24 as an alkali absorbent. In the present invention, the oxidation-reduction agent is an agent for reducing NOx in the flue gas on a denitration catalyst, and oxidizing Hg in the presence of HCl. The oxidation-reduction agent functions as an oxidizing agent for oxidizing and chlorinating Hg in the presence of HCl on the denitration catalyst, and a reducing agent for reducing $NH_3$. The reducing agent is an agent for reducing NOx in the flue gas on a denitration catalyst. The mercury chlorinating agent is an agent for oxidizing Hg in the presence of HCl.

<Chemical Supplying Unit>

The chemical supplying unit 19A adjusts the mixed solution 17 by mixing the $NH_4Cl$ solution 14, the $NH_3$ solution 15, and the HCl solution 16 in any proportion in liquid states, and supplies the adjusted mixed solution 17 into the flue 18 of the boiler 11.

(Adjusting $NH_4Cl$ Solution)

The $NH_4Cl$ solution 14 used as an oxidation-reduction agent is adjusted to a predetermined concentration. Ammonium chloride ($NH_4Cl$) powder 31 is conveyed and supplied to a silo 32 in which the $NH_4Cl$ powder is temporarily retained. A blower 33 supplies air 34 to the $NH_4Cl$ powder 31 in the silo 32 and prevents the $NH_4Cl$ powder 31 from drying and fixed in the silo 32. A predetermined amount of the $NH_4Cl$ powder 31 in the silo 32 is supplied to an $NH_4Cl$ powder feed path 36 from the silo 32 by a feeder 35 and fed into an $NH_4Cl$ dissolving tank 37. A water supplying tank 38 feeds water 39 into the $NH_4Cl$ dissolving tank 37. The $NH_4Cl$ dissolving tank 37 includes a stirring unit 40-1, and the $NH_4Cl$ powder 31 supplied into the $NH_4Cl$ dissolving tank 37 is dissolved in the water 39, thereby generating mixed solution 17 of a predetermined concentration. The stirring unit 40-1 keeps the concentration of the mixed solution 17 constant. The amount of water 39 supplied from the water supplying tank 38 is adjusted with an adjusting valve V1.

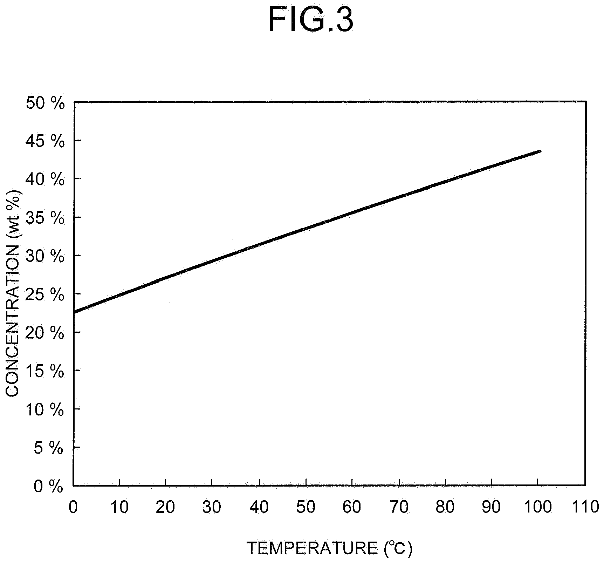

The concentration of the $NH_4Cl$ solution 14 is preferably more than 0wt% and equal to or less than 43wt%, more preferably equal to or more than 10wt% and equal to or less than 23wt%, more preferably equal to or more than 18wt% and equal to or less than 23wt%, and most preferably about 20wt%. This is because, the $NH_4Cl$ powder 31 needs to be dissolved in the water 39 at least at room temperature (for example, at around 20°C), and the concentration of the $NH_4Cl$ solution 14 should be equal to or less than saturation concentration of $NH_4Cl$ in water. Fig. 3 is a schematic of the relationship between the temperature of $NH_4Cl$ and the saturation concentration in water. As shown in Fig. 3, if the temperature of the solution is about 0°C, the saturation concentration of the $NH_4Cl$ powder 31 dissolved in the water 39 is about 23wt(, and if the temperature is about 100°C, the saturation concentration of the $NH_4Cl$ powder 31 dissolved in the water 39 is about 43wt%. Accordingly, the concentration of the $NH_4Cl$ solution 14 needs to be more than 0wt% and equal to or less than 43wt%.

**EP 2 444 144 B1**

(Controlling the Concentration of NH$_4$Cl Solution)

The NH$_4$Cl solution 14 in the NH$_4$Cl dissolving tank 37 is measured by a concentration meter 41 and the measured concentration value of the NH$_4$Cl solution 14 is transmitted to an arithmetic apparatus 42. The arithmetic apparatus 42 determines the supplies of the NH$_4$Cl powder 31 and the water 39, based on the concentration of the NH$_4$Cl solution 14. The arithmetic apparatus 42 transmits control signals to the feeder 35 and the adjusting valve V1, and adjusts the supplies of the NH$_4$Cl powder 31 and the water 39. The concentration of the NH$_4$Cl solution 14 in the NH$_4$Cl dissolving tank 37 is adjusted so as to fall within a range more than 0wt% and equal to or less than 43wt%.

(Adjusting NH$_3$ Solution)

The NH$_3$ solution 15 obtained by dissolving NH$_3$ and used as a reducing agent, is adjusted in an NH$_3$ dissolving tank 43. The concentration of NH$_3$ is preferably adjusted, for example, so as to fall within a range larger than 0wt% and equal to or less than 28wt%. The NH$_3$ dissolving tank 43 includes a stirring unit 40-2, and the stirring unit 40-2 keeps the concentration of NH$_3$ in the NH$_3$ solution 15 constant.

(Adjusting HCl Solution)

The HCl solution 16 obtained by dissolving HCl and used as an oxidation-reduction agent, is adjusted in an HCl dissolving tank 44. The concentration of HCl is preferably adjusted, for example, so as to fall within a range larger than 0wt% and equal to or less than 38wt%. The HCl dissolving tank 44 includes a stirring unit 40-3, and the stirring unit 40-3 keeps the concentration of HCl in the HCl solution 16 constant.

A pump 45-1 feeds the NH$_4$Cl solution 14 into a mixed solution dissolving tank 47 from an NH$_4$Cl dissolving tank 37 through an NH$_4$Cl solution feed pipe 46. A pump 45-2 feeds the NH$_3$ solution 15 into the mixed solution dissolving tank 47 from the NH$_3$ dissolving tank 43 through an NH$_3$ solution feed pipe 48. A pump 45-3 feeds the HCl solution 16 into the mixed solution dissolving tank 47 from the HCl dissolving tank 44 through an HCl solution feed pipe 49. Accordingly, the mixed solution dissolving tank 47 retains the solutions.

The NH$_4$Cl solution feed pipe 46, the NH$_3$ solution feed pipe 48, and the HCl solution feed pipe 49 include flowmeters 50-1 to 50-3 that measure the flow rates of the NH$_4$Cl solution 14, the NH$_3$ solution 15, and the HCl solution 16, and adjusting valves V2 to V4 that adjust the flow rates of the NH$_4$Cl solution 14, the NH$_3$ solution 15, and the HCl solution 16, respectively. The flow rates of the NH$_4$Cl solution 14, the NH$_3$ solution 15, and the HCl solution 16 are measured by the flowmeters 50-1 to 50-3, and the supplies of the NH$_4$Cl solution 14, the NH$_3$ solution 15, and the HCl solution 16 are adjusted with the adjusting values V2 to V4. The mixed solution dissolving tank 47 includes a stirring unit 40-4, and the stirring unit 40-4 keeps the concentrations of NH$_4$Cl, NH$_3$, and HCl in the mixed solution 17 constant.

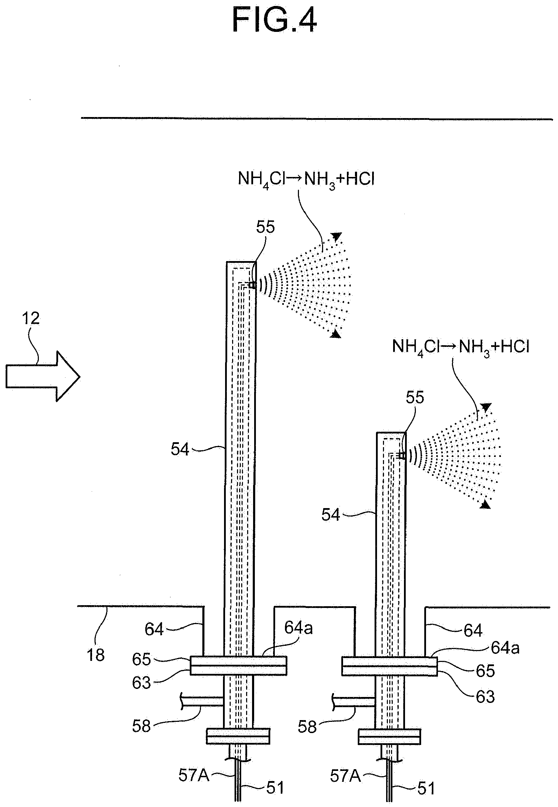

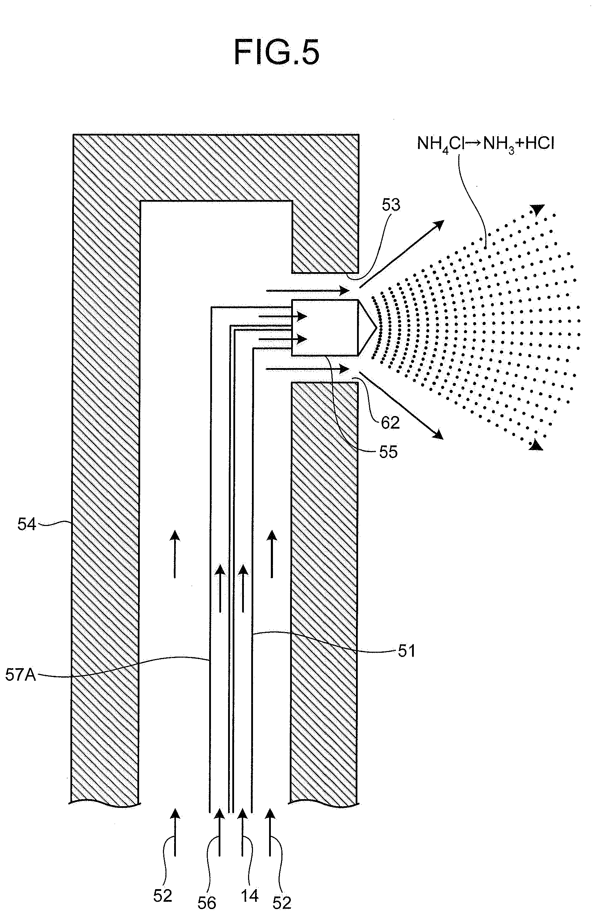

In the mercury reduction system 10A according to the present embodiment, the chemical supplying unit 19A includes an mixed solution feed pipe 51 for supplying the mixed solution 17 into the flue 18 in a liquid state, a blow pipe 54 (see Figs. 4 and 5) that is inserted into the flue 18 so as to surround the mixed solution feed pipe 51 and has an injection hole 53 (see Fig. 5) from which air 52 supplied inside is injected into the flue 18, and a two-fluid nozzle 55 that is attached to an end of the mixed solution feed pipe 51 and injects the mixed solution 17. The chemical supplying unit 19A includes an air feed pipe 57A connected to the two-fluid nozzle 55 for supplying air 56 used for compressing and spraying the NH$_4$Cl solution 14, and an air feed pipe 58 connected to the blow pipe 54 (see Fig. 4) for supplying the air 52 used for compressing and spraying the NH$_4$Cl solution 14 into the blow pipe 54. In Fig. 1, the air feed pipe 58 is inserted into the flue 18. However, the air feed pipe 58 is connected to the blow pipe 54 (see Fig. 4).

Fig. 4 is a schematic of flues in which the NH$_4$Cl solution feed pipe and the air feed pipe are inserted and near the flues. Fig. 5 is a partially enlarged sectional view of Fig. 4. As shown in Fig. 4, the blow pipe 54 is inserted into the flue 18 so as to surround the mixed solution feed pipe 51 and the air feed pipe 57A. As shown in Fig. 5, the mixed solution feed pipe 51 is provided so as to be adjacent to the air feed pipe 57A in the blow pipe 54. The two-fluid nozzle 55 is provided in the injection hole 53 at the wall surface of the blow pipe 54, and connected to the mixed solution feed pipe 51 and the air feed pipe 57A. The mixed solution 17 injected from the two-fluid nozzle 55 is sprayed by the air 56, and the mixed solution 17 is further sprayed into the flue 18, accompanied with the air 52 injected from the injection hole 53. The mixed solution 17 in the mixed solution dissolving tank 47 is fed to a two-fluid nozzle 55 though a mixed solution feed pipe 51, by a feed pump 59. A flowmeter 50-4 measures the flow rate of the mixed solution 17 in the mixed solution feed pipe 51, and an adjusting valve V5 adjusts the supply of the mixed solution 17.

Air 56 is fed to the two-fluid nozzle 55 from an air supplying unit 60 through an air feed pipe 57A, and used as compressed air for spraying the mixed solution 17 from the two-fluid nozzle 55. Accordingly, the mixed solution 17 injected from the two-fluid nozzle 55 can be sprayed as fine liquid droplets. As shown in Fig. 1, a flowmeter 50-5 measures the flow rate of the air 56 supplied from the air supplying unit 60, and an adjusting valve V6 adjusts the flow rate. The size of the liquid droplets of the mixed solution 17 sprayed from the two-fluid nozzle 55 can be adjusted, by the flow rate of the air 56.

The flow rate of the air 56 injected from the two-fluid nozzle 55, for example, is preferably made at an air-water ratio of equal to or more than 100 and equal to or less than 10000 (volume ratio). This is to spray the mixed solution 17 injected from the two-fluid nozzle 55 into the flue 18, in fine liquid droplets.

An air supplying unit 61 feeds the air 52 into the blow pipe 54 through the air feed pipe 58, and the air 52 is used as compressed air for dispersing the liquid droplets of the mixed solution 17 sprayed from the two-fluid nozzle 55. As shown in Fig. 1, the flow rate of the air 52 supplied from the air supplying unit 61 is measured by a flowmeter 50-6, and adjusted with a adjusting valve V7.

The air 52 is injected from a space 62 between the injection hole 53 of the blow pipe 54 and the two-fluid nozzle 55. Because the air 52 is injected from the space 62, the liquid droplets of the mixed solution 17 sprayed from the two-fluid nozzle 55 can be dispersed into the flue 18 further more.

The air 52 injected from the injection hole 53 is used to prevent the mixed solution 17 injected from the two-fluid nozzle 55 from being fixed to the blow pipe 54, and to prevent the temperature in the blow pipe 54 from increasing. Accordingly, the $NH_4Cl$ solution 14 is prevented from boiling and ammonium chloride particles are prevented from depositing.

The air 52 flows between the blow pipe 54 and the mixed solution feed pipe 51. Accordingly, the air 52 acts as air for cooling the $NH_4Cl$ solution 14, and prevents the heat of the flue gas 12 in the flue 18 from being transmitted into the mixed solution feed pipe 51 from the outside of the blow pipe 54. Because the temperature in the blow pipe 54 is prevented from increasing and the mixed solution 17 is prevented from being heated, the mixed solution 17 is prevented from boiling in the blow pipe 54, thereby keeping the liquid state of the mixed solution 17 up to when the mixed solution 17 is injected. It is also possible to prevent the two-fluid nozzle 55 from corroding.

Because the temperature in the blow pipe 54 can be prevented from increasing, a metal material can be used for the mixed solution feed pipe 51 and the air feed pipe 57A. The material for the mixed solution feed pipe 51 and the air feed pipe 57A may be, for example, as follows: The mixed solution feed pipe 51 may be a corrosion resistant metal such as a nickel based heat resistant and corrosion resistant alloy like Hastelloy C, and a resin-lined steel pipe (low temperature portion). The air feed pipe 57A may be carbon steel, stainless-steel, and the like. The material for the mixed solution feed pipe 51 and the air feed pipe 57A is not limited to the metal material. Because the mixed solution 17 can be supplied into the flue 18 from the dissolved mixed solution dissolving tank 47 in a room temperature, an inexpensive resin or a resin-lined pipe can be used as a material for the mixed solution feed pipe 51 and the blow pipe 54.

In the mercury reduction system 10A according to the present embodiment, for example, the number of the two-fluid nozzle 55 provided in the flue 18 is equal to or less than a few to a few tens. Conventionally, the number of generally used $NH_3$ grid provided in the flue 18, for example, is from a few hundreds to a few thousands. Alternatively, the number of the two-fluid nozzle 55 in the flue 18 is only from a few to a few tens, and the two-fluid nozzle 55 is fixed by flange portions 63 and 65. Accordingly, the nozzle can be replaced easily. In Fig. 4, two pieces of two-fluid nozzles 55 are provided. However, the present invention is not limited thereto, and a plurality of two-fluid nozzles 55 may be provided, based on the installation area in the flue 18.

As shown in Fig. 4, each of blow pipes 54 includes a flange portion 63 at the outside of the flue 18 and at the outer periphery of the blow pipe 54. The flange portion 63 is formed so as to correspond to a flange portion 65 provided at an end 64a of an opening 64 of the flue 18. Because the flange portion 63 of the blow pipe 54 is connected to the flange portion 65 provided at the flue 18, the blow pipe 54 is fixed to the flue 18. The flange portion 63 of the blow pipe 54 and the flange portion 65 of the flue 18 may be fixed by bolts, for example, by providing a plurality of holes at the outer peripheries of the flange portion 63 and the flange portion 65. The blow pipe 54 can be easily inserted and removed into and from the flue 18, by removably connecting the flange portion 63 and the flange portion 65. Accordingly, it is possible to easily maintain the insides of the blow pipe 54 and the flue 18.

The two-fluid nozzle 55 is used for spraying the mixed solution 17. However, the present invention is not limited thereto, and an ordinary injection nozzle for spraying liquid may be used.

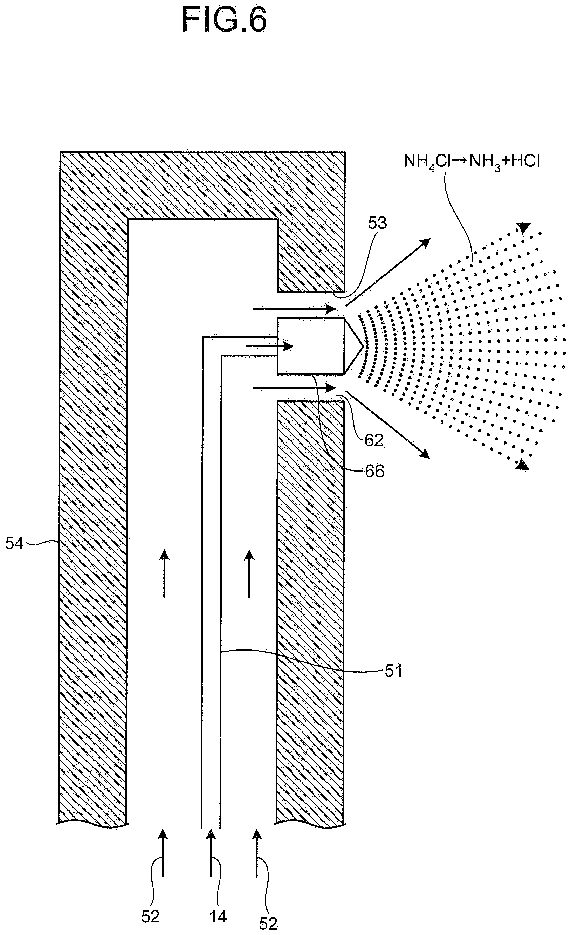

Fig. 6 is a partially enlarged sectional view of a blow pipe with an ordinary injection nozzle. As shown in Fig. 6, if the size of liquid droplets of the mixed solution 17 need not particularly be adjusted, the mixed solution 17 may be injected from an injection nozzle 66 and sprayed into the flue 18, accompanied with the air 52 injected from the injection hole 53.

The blow pipe 54 includes the mixed solution feed pipe 51 and the air feed pipe 57A therein, and the mixed solution 17 is sprayed into the flue 18 from the two-fluid nozzle 55. However, the present invention is not limited thereto. As long as the mixed solution 17 in the mixed solution feed pipe 51 is prevented from being heated, the mixed solution 17 may be sprayed into the flue 18, by connecting the mixed solution feed pipe 51 and the air feed pipe 57A with the two-fluid nozzle 55, without using the blow pipe 54.

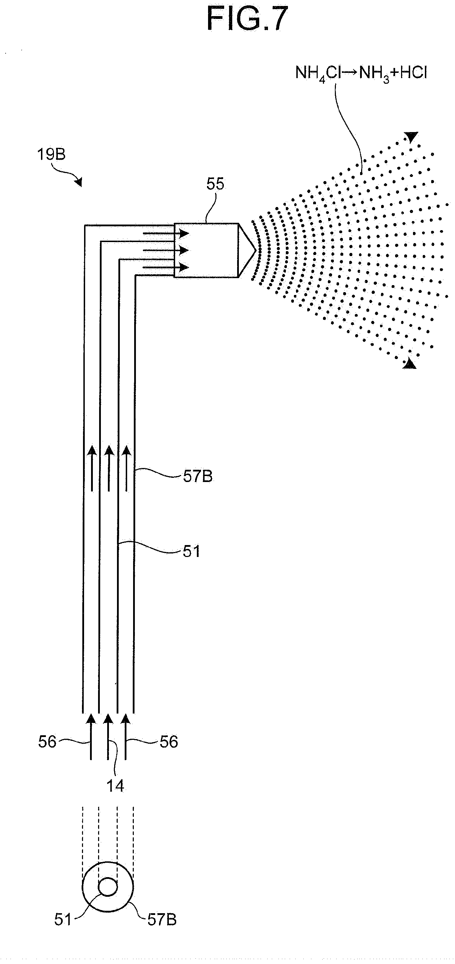

Fig. 7 is a schematic of another spraying method of $NH_44Cl$ solution with a two-fluid nozzle. As shown in Fig. 7, a chemical supplying unit 19B has a double pipe structure, and uses the mixed solution feed pipe 51 as an inner pipe, and an air feed pipe 57B as an outer pipe. The mixed solution feed pipe 51 and the air feed pipe 57B are connected to the two-fluid nozzle 55.

In other words, as shown in Fig. 7, the chemical supplying unit 19B includes the $NH_4Cl$ solution feed pipe 46 for supplying the $NH_4Cl$ solution 14 into the flue 18, the air feed pipe 57B inserted into the flue 18 so as to surround the $NH_4Cl$ solution feed pipe 46 for supplying the air 56 for spraying the mixed solution 17 into the flue 18, and the two-fluid nozzle 55 that is fixed to the ends of the mixed solution feed pipe 51 and the air feed pipe 57B and injects the mixed solution 17 and the air 56. Because the air feed pipe 57B surrounds the mixed solution feed pipe 51, the mixed solution 17 in the mixed solution feed pipe 51 is prevented from being heated by the flue gas 12 in the flue 18, due to the air 56 supplied into the air feed pipe 57B. The mixed solution 17 can also be splayed into the flue 18 accompanied with the air 56. Because the chemical supplying unit 19B does not include the blow pipe 54 as shown in Figs. 4 to 6, the installation of the mixed solution feed pipe 51, the air feed pipe 57B, and the two-fluid nozzle 55 in the flue 18 can be simplified. Because the blow pipe 54 is not included, the mixed solution feed pipe 51, the air feed pipe 57B, and the two-fluid nozzle 55 can be easily replaced.

The air 56 is supplied from the air supplying unit 60 and the air 52 is supplied from the air supplying unit 61, and air is separately supplied from different supplying sources. However, the present invention is not limited thereto, and the air may be supplied from the same supplying source. In other words, the air 52 may be supplied from the air supplying unit 60, and the air 56 may be supplied from the air supplying unit 61.

The temperature of the flue gas 12 in the flue 18, for example, is equal to or more than 320°C and equal to or less than 420°C, and is very hot. The mixed solution feed pipe 51 is provided in the blow pipe 54, and the air 52 is used to cool the mixed solution 17. Accordingly, the mixed solution 17 is maintained in a liquid state up to when the mixed solution 17 is injected from the two-fluid nozzle 55. Because the mixed solution 17 is sprayed from the two-fluid nozzle 55 in liquid droplets, the liquid droplets of the sprayed mixed solution 17 are evaporated, due to the high ambient temperature of the flue gas 12.

The liquid droplets of the sprayed mixed solution 17 temporarily generate fine $NH_4Cl$ solid particles resulting from the $NH_4Cl$ solution 14 in the mixed solution 17, because the liquid droplets are evaporated by the high ambient temperature of the flue gas 12. As the following formula (1), the liquid droplets are decomposed into HCl gas and $NH_3$ gas, and sublimated. Accordingly, from the liquid droplets of the mixed solution 17 sprayed from the two-fluid nozzle 55, the $NH_4Cl$ solution 14 in the mixed solution 17 is decomposed into HCl gas and $NH_3$ gas, thereby supplying into the flue 18.

$$NH_4Cl \rightarrow NH_3 + HCl \dots \qquad (1)$$

The temperature of the flue gas 12 in the flue 18, for example, is preferably equal to or more than 320°C and equal to or less than 420°C, more preferably equal to or more than 320°C and equal to or less than 380°C, and more preferably equal to or more than 350°C and equal to or less than 380°C. Accordingly, the reduction reaction of NOx and the oxidation reaction of Hg can be simultaneously carried out on a denitration catalyst.

The $NH_3$ concentration and the HCl concentration in the flue gas 12 in the flue 18 are set, relative to the NOx concentration in the flue gas 12, so that the ratio of the molar number of $NH_3$ to the molar number of NOx in the flue gas 12 ($NH_3$/NOx molar ratio) is a value equal to or less than one, based on the required denitration performance. Although depending on the NOx concentration in the flue gas 12, the mixed solution 17 may be sprayed so as the $NH_3$ concentration and the HCl concentration fall within a range from a few tens to a few hundreds parts per million, or preferably from a few tens to 200 parts per million. This is because $NH_3$ and NOx react at a molar ratio of 1:1, and if $NH_3$ is over-supplied, an excess of $NH_3$ is remained after the reaction. Acid sulfate is produced from $NH_3$ and the components in the flue gas 12. By spraying the mixed solution 17 as the above, it is possible to prevent the inside of the flue 18, the air heater 22, the dust collector 23, and the like, from being corroded and damaged, and from being blocked due to ash deposition. It is also possible to prevent the flue gas 12 from leaking from the damaged flue 18.

The Hg concentration in the flue gas 12 is preferably set in a range equal to or more than $0.1 \mu g/m^3 N$ and equal to or less than a few ten $\mu g/m^3 N$, and relative to the HCl concentration in the flue gas 12, it is preferable to set in a range equal to or less than 1/1000 in molar ratio.

The size of the hole of the two-fluid nozzle 55 is preferably equal to or more than 0.01 millimeter and equal to or less than 10 millimeters, and more preferably equal to or more than 0.1 millimeter and equal to or less than 5 millimeters.

The diameter of the liquid droplets of the mixed solution 17 sprayed from the two-fluid nozzle 55 is preferably fine enough to be equal to or more than 1 nanometer and equal to or less than 100 micrometers on average. By generating the fine liquid droplets of equal to or more than 1 nanometer and equal to or less than 100 micrometers on average, the $NH_4Cl$ solid particles generated from the $NH_4Cl$ solution 14 in the liquid droplets of the sprayed mixed solution 17 can be decomposed into $NH_3$ gas and HCl gas in a short retention time, and sublimated in the flue gas 12. Because the mixed solution 17 does not need to be heated in advance, it is possible to prevent the flue 18 and the two-fluid nozzle 55 from being degraded and corroded.

Accordingly, in the mercury reduction system 10A according to the present embodiment, the mixed solution 17 obtained by mixing the $NH_4Cl$ solution 14, the $NH_3$ solution 15, and the HCl solution 16 is supplied into the flue 18.

Consequently, the reduction of NOx as well as the oxidation of Hg can be performed with a single simple device.

By controlling the supplies of the $NH_4Cl$ solution 14, the $NH_3$ solution 15, and the HCl solution 16 that form the mixed solution 17, the supplies of the $NH_4Cl$ solution 14, the $NH_3$ solution 15, and the HCl solution 16 in the mixed solution 17 can be arbitrarily adjusted, based on the gaseous nature such as the concentrations of NOx or Hg in the flue gas 12. Accordingly, the denitration performance of NOx can be satisfied, and the oxidation performance of Hg can be maintained.

The two-fluid nozzle 55 is used as a unit for spraying the mixed solution 17. Because the mixed solution 17 is sprayed from the two-fluid nozzle 55, the $NH_4Cl$ solution 14, the $NH_3$ solution 15, and the HCl solution 16 that form the mixed solution 17 are decomposed into HCl gas and $NH_3$ gas, due to the high ambient temperature of the flue gas 12, thereby supplying into the flue 18. Consequently, a hydrogen chloride vaporizer, a spray grid, a hydrochloric acid solution tank, and the like in a mercury chlorinating agent feed device of the conventional mercury reduction system can be omitted.

An $NH_4Cl$ powder 31 used for adjusting the $NH_4Cl$ solution 14 included in the mixed solution 17 is neutral salt. Accordingly, it is easy to handle, and inexpensive and easy to obtain as can be used as fertilizer. Because $NH_3$ gas can be generated from the $NH_4Cl$ solution 14, the usage of the $NH_3$ gas can be reduced. Because HCl is a dangerous substance, handling costs, such as a cost for transportation, a cost for legislative permission, and a facility cost for safety control are expensive. However, the $NH_4Cl$ powder 31 can significantly reduce the handling cost.

The $NH_4Cl$ solution 14 in the mixed solution 17 is dissolved in water, and fully evaporated into $NH_3$ gas and HCl gas. Because $NH_4Cl$ solid particles resulting from the $NH_4Cl$ solution 14 do not remain, it is possible to prevent the $NH_4Cl$ solid particles from accumulating in the flue 13 and on the denitration catalyst provided in the downstream side. It is also possible to prevent the denitration catalyst from deteriorating.

The mixed solution 17 uses the flue gas 12 as a heat source, and the $NH_4Cl$ solution 14, the $NH_3$ solution 15, and the HCl solution 16 are evaporated into $NH_3$ gas and HCl gas. Accordingly, the installation of sublimation equipment such as a new heat source like steam for evaporating the mixed solution 17, can be omitted. Consequently, it is possible to reduce the retention time of the mixed solution 17 required for evaporating in the flue gas 12.

The flow rate of the mixed solution 17 sprayed from the two-fluid nozzle 55 is only a small amount of a few t/h compared with the amount of the flue gas, for example, of 1,500, $000m^3N/h$. Accordingly, the temperature of the flue gas 12 can be prevented from lowering, for example, to equal to or less than a few °C. Consequently, it is possible to prevent SO3 in the flue gas 12 from condensing, and also prevent ash in the flue gas 12 from accumulating and fixing in the flue 18 and the like.

Compared with a mercury reduction system that supplies the solid powder of $NH_4Cl$ into a flue, in other words, that sprays $NH_4Cl$ by crushing the $NH_4Cl$ solid, the mercury reduction system 10A according to the present embodiment can easily reduce the size of the liquid particles of the $NH_4Cl$ solution 14, because the liquid such as the $NH_4Cl$ solution 14 contained in the mixed solution 17 is used. Accordingly, solid particles having the size equal to or less than the sprayed fine liquid droplets can be generated. Consequently, is possible to significantly reduce the time required to decompose the $NH_4Cl$ solution 14.

Because the $NH_4Cl$ powder 31 is used for the $NH_4Cl$ solution 14, $NH_4Cl$ need not be finely crushed as a conventional method, but may be stored in the pellet state and used accordingly.

The supplies of the $NH_4Cl$ powder 31 and the water 39 can be adjusted based on the concentration of the $NH_4Cl$ solution 14. Accordingly, the concentration of the $NH_4Cl$ solution 14 can be adjusted, based on the concentrations of NOx and Hg in the flue gas 12.

The HCl gas and the $NH_3$ gas generated from the liquid droplets of the $NH_4Cl$ solution 14, $NH_3$ solution 15, and HCl solution 16 as shown in Fig. 1, are fed to the reduction denitration apparatus 20 accompanied with the flue gas 12. The $NH_3$ gas generated by decomposing $NH_4Cl$, is used to carry out reduction denitration of NOx in the reduction denitration apparatus 20, and the HCl gas is used to carry out oxidation of Hg. Accordingly, NOx and Hg are reduced from the flue gas 12.

The reduction denitration apparatus 20 is filled with denitration catalyst. On the denitration catalyst, $NH_3$ is used to carry out reduction denitration of NOx as the following formula (2), and HCl is used to carry out oxidation of Hg as the following formula (3).

$$4NO + 4NH_3 + O_2 \rightarrow 4N_2 + 6H_2O \ ... \qquad (2)$$

$$Hg + 1/2O_2 + 2HCl \rightarrow HgCl_2 + H_2O \ ... \qquad (3)$$

In the mercury reduction system 10A according to the present embodiment, the $NH_4Cl$ solution 14, the $NH_3$ solution 15, and the HCl solution 16 are mixed as the mixed solution 17. However, the present invention is not limited thereto. $NH_4Cl$ is decomposed into $NH_3$ gas and HCl gas, and generates a reducing agent and a mercury chlorinating agent. Accordingly, only the $NH_4Cl$ solution 14 may be sprayed into the flue 18. It is also possible to mix the $NH_3$ solution 15 and the HCl solution 16 in any proportion, and spray into the flue 18 as a mixed solution.

In the mercury reduction system 10A according to the present embodiment, the chemical supplying unit 19A uses the $NH_4Cl$ solution 14 containing $NH_4Cl$, the $NH_3$ solution 15, and the HCl solution 16 as the mixed solution 17. However, the present invention is not limited thereto. For example, in the present embodiment, $NH_4Cl$ is used as an oxidation-reduction agent. However, an ammonium halide such as ammonium bromide (NH4Br) and ammonium iodide (NH4I), other than $NH_4Cl$ may be used as the oxidation-reduction agent, and use the aqueous solution.

$NH_3$ is used as a reducing agent. However, urea $((H_2N)_2C=O)$ and the like with reducing action may be used as the reducing agent, and use the aqueous solution. To adjust the $NH_4Cl$ solution 14, for example, not only the $NH_4Cl$ powder 31, but urea $((H_2N)_2C=O)$ may be mixed by dissolving into water 39, and the aqueous solution in which the $NH_4Cl$ powder 31 and the urea are mixed may be used. In a boiler facility, nitrogen oxide concentration may vary. In such an event, the supply of $NH_3$ may be increased, by adding the urea as well as $NH_4Cl$.

HCl is used as a mercury chlorinating agent. However, a hydrogen halide such as hydrogen bromide (HBr) and hydrogen iodide (HI) other than HCl may be used as the mercury chlorinating agent, and use the aqueous solution.

Besides the $NH_3$ solution 15 and the HCl solution 16, at least one or more of a solution in which the oxidation-reduction agent is dissolved, a solution in which the reducing agent is dissolved, and a solution in which the mercury chlorinating agent is dissolved may be mixed with the $NH_4CL$ solution 14.

As shown in Fig. 1, the flue gas 12 is fed into the wet desulfurization apparatus 25 through the air heater 22 and the dust collector 23, after NOx is reduced and Hg is oxidized in the flue gas 12, in the reduction denitration apparatus 20. A heat collector may be provided between the air heater 22 and the dust collector 23. HgCl in the flue gas 12 is absorbed by the limestone-gypsum slurry 24 used as an alkali absorbent in the wet desulfurization apparatus 25, and separated and removed from the flue gas 12. Accordingly, the flue gas 12 is purified. The purified flue gas is discharged from a stack 68 as purified gas 67. Here, the limestone-gypsum slurry 24 is used as the alkali absorbent. However, any solution that can absorb HgCl in the flue gas 12 can be used as the alkali absorbent.

A mixer that mixes $NH_3$ gas and HCl gas may be provided downstream of the two-fluid nozzle 55 and upstream of the reduction denitration apparatus 20. The mixer, for example, may be a static mixer and the like. If the $NH_3$ gas and the HCl gas generated by evaporating the $NH_4Cl$ solution 14 sprayed from the two-fluid nozzle 55 are not dispersed enough, the mixer provided upstream of the reduction denitration apparatus 20 can uniformly disperse the $NH_3$ gas and the HCl gas in the flue gas 12.

A flowmeter 71 that measures the flow rate of the mixed solution 17 sprayed from the two-fluid nozzle 55 may be provided downstream of the two-fluid nozzle 55. Accordingly, the flow rate of the mixed solution 17 sprayed from the two-fluid nozzle 55 can be measured. The flow velocity of the flue gas 12 in the flue 18 can also be measured.

NOx concentration meters 72-1 and 72-2 are provided at an inlet side and an outlet side of the reduction denitration apparatus 20. The reduction rate of NOx in the reduction denitration apparatus 20 can be identified, from the NOx concentration value in the flue gas 12 measured by the NOx concentration meters 72-1 and 72-2. By controlling the concentration and the supply flow rate of the $NH_4Cl$ solution 14, from the value of the NOx concentration in the flue gas 12 measured by the NOx concentration meters 72-1 and 72-2, the concentration and the supply flow rate of the $NH_4Cl$ solution 14 sprayed from the two-fluid nozzle 55 can be adjusted, thereby satisfying a predetermined denitration performance.

The concentrations of $NH_3$ and HCl of the flue gas 12 supplied into the flue 18 are set, relative to the NOx concentration of the flue gas 12, so that the ratio between the molar number of $NH_3$ and the molar number of NOx in the flue gas 12 ($NH_3$/NOx molar ratio) is a value equal to or less than one, based on the required denitration performance.

$NH_3$ may be added, by spraying the $NH_3$ gas dissociated from the $NH_4Cl$ solution 14 into the flue 18, and injecting $NH_3$ obtained from $NH_3$ gas 81 into the flue 18, so that Nox falls within a range from a few tens to a few hundreds parts per million, or preferably from a few tens to 200 parts per million. This is because $NH_3$ and NOx react at a molar ratio of 1:1, and if $NH_3$ is over-supplied, an excess of $NH_3$ is remained after the reaction. Acid sulfate is produced from $NH_3$ and the components in the flue gas 12, and may corrode and damage the inside of the flue 18, the air heater 22, the dust collector 23, and the like, and may lead to blockage due to ash deposition. Accordingly, it is possible to prevent the flue gas 12 from leaking from the damaged flue 18.

The Hg concentration in the flue gas 12 is preferably set in a range equal to or more than $0.1\mu g/m^3N$ and equal to or less than a few ten $\mu g/m^3N$, and relative to the HCl concentration in the flue gas 12, it is preferable to set in a range equal to or less than 1/1000 in molar ratio.

The mercury reduction system 10A according to the present embodiment also includes a mercury (Hg) concentration meter 73 that measures mercury (Hg) contained in the treatment gas discharged from the reduction denitration apparatus 20, and a hydrogen chloride (HCl) concentration meter 74 that measures HCl contained in the flue gas 12 supplied to the wet desulfurization apparatus 25. The Hg concentration meter 73 may be provided downstream of the wet desulfurization apparatus 25, and may measure mercury (Hg) contained in the treatment gas discharged from the wet desulfurization apparatus 25.

The oxidation rate of Hg in the reduction denitration apparatus 20 can be identified from the values of the HCl concentration and the Hg concentration in the flue gas 12 measured by an Hg concentration meter 73 and an HCl concentration meter 74. The supply flow rate of the $NH_4Cl$ solution 14 sprayed from the two-fluid nozzle 55 is adjusted, from the value of the Hg concentration in the flue gas 12 measured by the Hg concentration meter 73 and the HCl concentration meter 74. Accordingly, a predetermined denitration performance can be satisfied and the oxidation performance of Hg can be maintained.

The additional amount of the $NH_4Cl$ solution 14 and the supply flow rate of the HCl solution 16 are controlled, so that the combination of the HCl gas dissociated from the $NH_4Cl$ solution 14 and the HCl gas generated by evaporating the HCl solution 16 has the mercury oxidation rate ($Hg^{2+}/Hg^T$) of equal to or more than 95%, or the metallic mercury concentration ($Hg^0$) of equal to or less than 1 $\mu g/Nm^3$, at the outlet of the reduction denitration apparatus 20. $Hg^T$ is the total mercury concentration, and expressed by a sum of the metallic mercury concentration ($Hg^0$) and the oxidized mercury concentration ($Hg^{2+}$), as the following formula (4).

$$Hg^T = Hg^0 + Hg^{2+} \quad \cdots \quad (4)$$

The supplies of the $NH_4Cl$ solution 14, the $NH_3$ solution 15, and the HCl solution 16 may be determined by calculating the contents of NOx, Hg, and HCl in the flue gas 12, from the nature of coal used in the boiler 11. In other words, the contents of NOx, Hg, and HCl in the flue gas 12 can be obtained by burning the nature of coal in the boiler 11. When the maximum amount of the coal is burned in the boiler 11, the maximum amounts of NOx, Hg, HCl in the flue gas 12 can be obtained from the combustion amount of the boiler 11. Consequently, the supplies of the $NH_4Cl$ solution 14, the $NH_3$ solution 15, and the HCl solution 16 can be determined by obtaining the contents of NOx, Hg, and HCl in the flue gas 12 from the nature of the coal used in the boiler 11. Accordingly, the mercury reduction system 10A according to the present embodiment can supply the $NH_4Cl$ solution 14, the $NH_3$ solution 15, and the HCl solution 16 into the flue 18, based on the balance of the concentrations of NOx and Hg in the flue gas 12 discharged from combustion equipment such as the boiler 11. Accordingly, HCl or $NH_3$ can be supplied by adjusting the required amount.

<Method of Controlling Supply>

An arithmetic apparatus 42 calculates the required amounts of $NH_3$ and HCl, based on the analyzed results of the NOx concentration and the Hg concentration in the flue gas 12, measured by the NOx concentration meters 72-1 and 72-2, and the Hg concentration meter 73. The arithmetic apparatus 42 determines the supplies of the $NH_4Cl$ solution 14, the $NH_3$ solution 15, and the HCl solution 16, from the obtained concentrations of $NH_3$ and HCl. The arithmetic apparatus 42 adjusts the supplies of the $NH_4Cl$ solution 14, the $NH_3$ solution 15, and the HCl solution 16, by controlling the opening and closing of the adjusting valves V2 to V4. The arithmetic apparatus 42 calculates the flow rate and the flow velocity of the mixed solution 17, based on the flow rate of the mixed solution 17 measured by the flowmeter 71, and the supply of the mixed solution 17 is adjusted by controlling the opening and closing of the adjusting valve V5.

If the mercury oxidation rate ($Hg^{2+}/Hg^T$) obtained by the Hg concentration meter 73 is smaller than 0.95, or if the metallic mercury concentration ($Hg^0$) is larger than 1 $\mu g/Nm^3$, the amount of HCl to be added is increased. HCl may be added, for example, by increasing the supply of the HCl solution 16.

The NOx concentration meter 72-2 measures the NOx concentration and the $NH_3$ concentration in the flue gas 12 at the outlet side of the reduction denitration apparatus 20. If the measured $NH_3$ concentration in the flue gas 12 is larger than 1 part per million, the amount of $NH_3$ to be added is reduced. If the NOx concentration in the flue gas 12 measured by the NOx concentration meter 72-2 is smaller than 1 part per million, the amount of $NH_3$ to be added is increased. However, the $NH_3$ concentration is set, so that the ratio of the molar number of $NH_3$ to the molar number of NOx of the flue gas 12 ($NH_3$/NOx molar ratio), is a value equal to or less than one based on the required denitration performance, relative to the NOx molar flow velocity(mol/H) at the inlet side of the flue gas 12. $NH_3$ can be added, for example, by increasing and decreasing the supply of the $NH_3$ solution 15.

In this manner, in the mercury reduction system 10A according to the present embodiment, the mixed solution 17 obtained by mixing the $NH_4Cl$ solution 14, the $NH_3$ solution 15, and the HCl solution 16 is sprayed into the flue 18 of the boiler 11, from the mixed solution dissolving tank 47 by the two-fluid nozzle 55. Accordingly, the $NH_4Cl$ solution 14, the $NH_3$ solution 15, and the HCl solution 16 are evaporated into HCl gas and $NH_3$ gas, thereby oxidizing and reducing Hg and NOx in the flue gas 12 on the denitration catalyst. Because the supplies of the $NH_4Cl$ solution 14, the $NH_3$ solution 15, and the HCl solution 16 in the mixed solution 17 are adjusted, appropriate amounts of the reducing agent and the mercury chlorinating agent can be arbitrarily supplied, based on the gaseous nature of the flue gas 12.

[Second Embodiment]

A mercury reduction system according to a second embodiment of the present invention will now be described with reference to the accompanying drawings.

The mercury reduction system according to the second embodiment of the present invention has the same configuration as the mercury reduction system according to the first embodiment. Accordingly, in the present embodiment, only a part of the configuration of the mercury reduction system will be described with accompanying drawings.

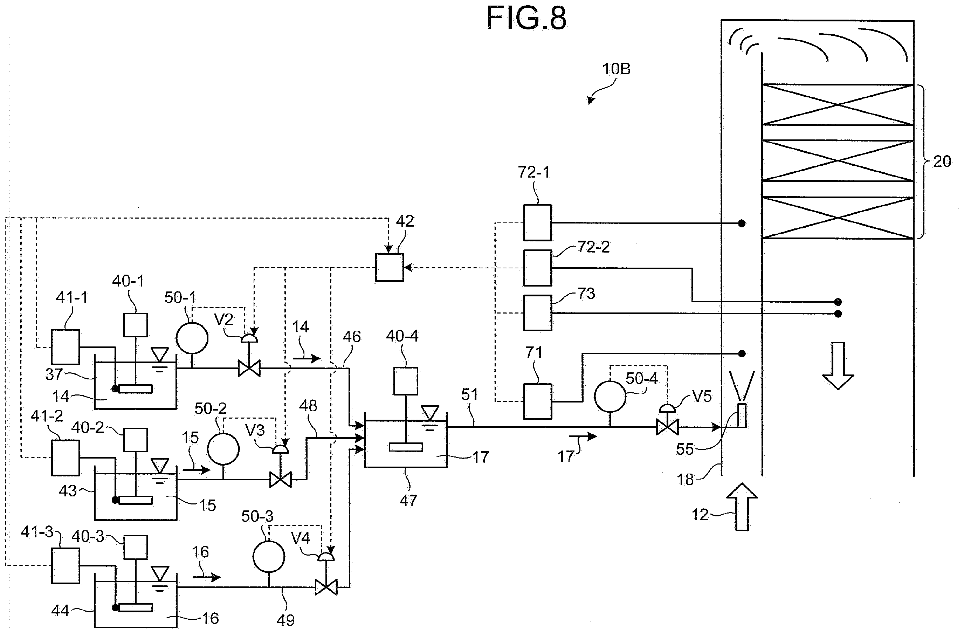

Fig. 8 is a schematic of a part of the mercury reduction system according to the second embodiment of the present invention. The same members as those of the mercury reduction system according to the first embodiment are denoted by the same reference numerals, and the detailed descriptions thereof will be omitted.

As shown in Fig. 8, a mercury reduction system 10B according to the present embodiment includes concentration meters 41-1 to 41-3 that measure the concentrations of $NH_4Cl$, $NH_3$, and HCl in the solutions, in the $NH_4Cl$ dissolving tank 37, the $NH_3$ dissolving tank 43, and the HCl dissolving tank 44, respectively.

The concentration meter 41-1 measures the concentration of $NH_4Cl$ in the $NH_4Cl$ solution 14, the concentration meter 41-2 measures the concentration of $NH_3$ in the $NH_3$ solution 15, and the concentration meter 41-3 measures the concentration of HCl in the HCl solution 16. The results of the measured concentrations of the $NH_4Cl$ solution 14, the $NH_3$ solution 15, and the HCl solution 16 are sent to the arithmetic apparatus 42. The arithmetic apparatus 42 obtains the feed rates of the $NH_4Cl$ solution 14, the $NH_3$ solution 15, and the HCl solution 16 fed into the mixed solution dissolving tank 47, based on the concentration values of $NH_4Cl$, $NH_3$, and HCl in the $NH_4Cl$ solution 14, the $NH_3$ solution 15, and the HCl solution 16, measured by the concentration meters 41-1 to 41-3, respectively.

The arithmetic apparatus 42 transmits the feed rates of the $NH_4Cl$ solution 14, the $NH_3$ solution 15, and the HCl solution 16 calculated by the arithmetic apparatus 42 to the adjusting valves V2 to V5, respectively. By adjusting the opening and closing of the adjusting valves V2 to V5, the flow rate of the $NH_4Cl$ solution 14 that flows through the $NH_4Cl$ solution feed pipe 46, the flow rate of the $NH_3$ solution 15 that flows through the $NH_3$ solution feed pipe 48, and the flow rate of the HCl solution 16 that flows through the HCl solution feed pipe 49 can be adjusted.

In this manner, the supplies of the $NH_4Cl$ solution 14, the $NH_3$ solution 15, and the HCl solution 16 are adjusted, based on the concentrations of $NH_4Cl$, $NH_3$, and HCl in the $NH_4Cl$ solution 14, the $NH_3$ solution 15, and the HCl solution 16. Accordingly, the mixed solution 17 with appropriate concentrations of $NH_4Cl$, $NH_3$, and HCl can be generated, thereby supplying into the flue 18.

[Third Embodiment]

A mercury reduction system according to a third embodiment of the present invention will now be described with reference to the accompanying drawings.

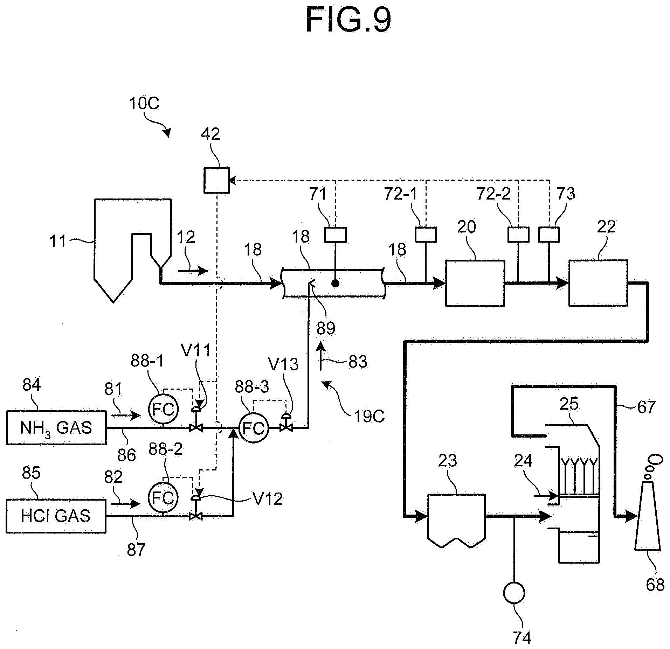

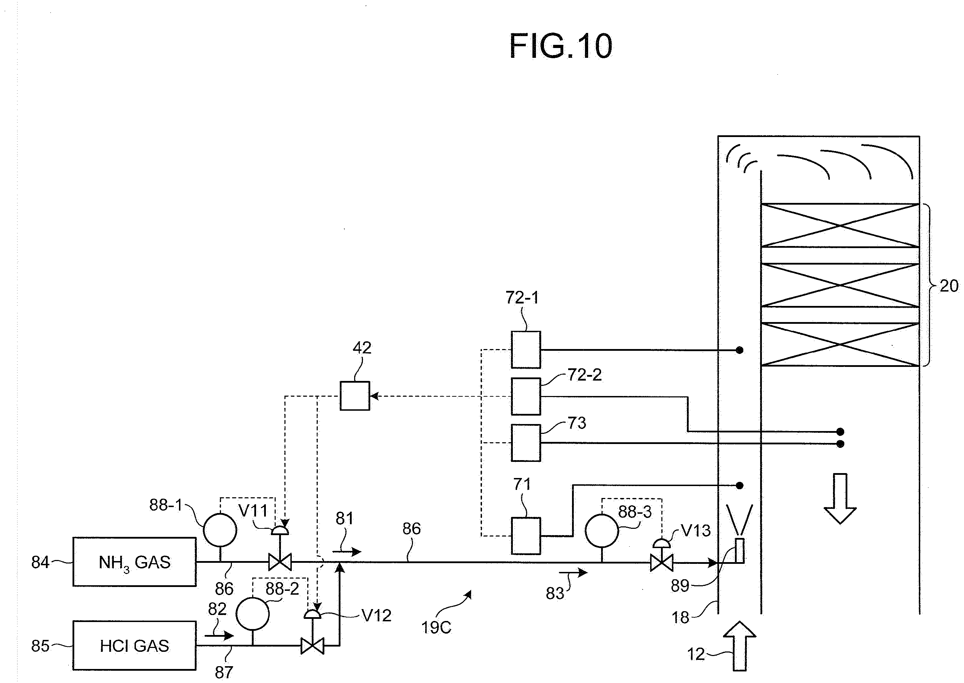

Fig. 9 is a schematic of the mercury reduction system according to the third embodiment of the present invention. Fig. 10 is a schematic of a part of the mercury reduction system. The same members as those of the mercury reduction system according to the first and the second embodiments are denoted by the same reference numerals, and the detailed descriptions thereof will be omitted.

As shown in Figs. 9 and 10, a mercury reduction system 10C according to the present embodiment supplies $NH_4Cl$, $NH_3$, and HCl in gaseous states, that are supplied by the mercury reduction system 10A according to the first embodiment of the present invention shown in Figs. 1 and 2, in liquid states.

In other words, as shown in Figs. 9 and 10, the mercury reduction system 10C according to the present embodiment is a mercury reduction system that reduces NOx and Hg in the flue gas 12 discharged from the boiler 11. The mercury reduction system 10C includes a chemical supplying unit 19C that mixes the $NH_3$ gas 81 used as a reducing agent and HCl gas 82 used as a mercury chlorinating agent in gaseous states, and supplies mixed gas 83 into the flue 18 of the boiler 11. The mercury reduction system 10C also includes the reduction denitration apparatus 20 including a denitration catalyst that reduces NOx in the flue gas 12 with $NH_3$ and oxidizes Hg in the presence of HCl, the air heater (APH) 22 that heat-exchanges the denitrated flue gas 12, the dust collector 23 that reduces dust in the denitrated flue gas 12, and the wet desulfurization apparatus 25 that reduces Hg oxidized in the reduction denitration apparatus 20 with the limestone-gypsum slurry 24 as an alkali absorbent.

The chemical supplying unit 19C also includes an $NH_3$ gas supplying unit 84 that supplies the $NH_3$ gas 81 used as a reducing agent as a gaseous material, an HCl gas supplying unit 85 that supplies the HCl gas 82 used as a mercury chlorinating agent as a gaseous material, an $NH_3$ gas feed pipe 86 that supplies the $NH_3$ gas 81 from the $NH_3$ gas supplying unit 84 into the flue 18, and an HCl gas feed pipe 87 that connects between the HCl gas supplying unit 85 and the $NH_3$ gas feed pipe 86.

The $NH_3$ gas feed pipe 86 includes a flowmeter 88-1 that measures the flow rate of the $NH_3$ gas 81, and the HCl gas feed pipe 87 includes a flowmeter 88-2 that measures the flow rate of the HCl gas 82. The flowmeters 88-1 and 88-2 measure the $NH_3$ gas 81 and the HCl gas 82, respectively, and adjusting valves V11 and V12 adjust the flow rates of the $NH_3$ gas 81 and the HCl gas 82, respectively. A flowmeter 88-3 that measures the flow rate of the mixed gas 83 is provided downstream of the $NH_3$ gas feed pipe 86, where the $NH_3$ gas 81 and the HCl gas 82 are mixed. The flowmeter 88-3 measures the mixed gas 83, and an adjusting valve V13 adjusts the flow rate of the mixed gas 83 supplied into the flue 18.

In the chemical supplying unit 19C, the $NH_3$ gas 81 and the HCl gas 82 are mixed before being fed into the flue 18, and injected into the flue 18 from an injection nozzle 89 as the mixed gas 83. The $NH_3$ gas 81 and the HCl gas 82 in the mixed gas 83 are fed to the reduction denitration apparatus 20 accompanied with the flue gas 12. As described above, on the denitration catalyst of the reduction denitration apparatus 20, the $NH_3$ gas is used to carry out reduction denitration of NOx, as the following formula (5), and the HCl gas is used to carry out oxidation of Hg as the following formula (6).

$$4NO+4NH_3+O_2 \rightarrow 4N_2+6H_2O \;... \qquad (5)$$

$$Hg+1/2O_2+2HCl \rightarrow HgCl_2+H_2O \;... \qquad (6)$$

Accordingly, in the mercury reduction system 10C according to the present embodiment, the mixed gas 83 containing the $NH_3$ gas 81 and the HCl gas 82 are injected into the flue 18 of the boiler 11 from the injection nozzle 89. Consequently, appropriate amounts of the $NH_3$ gas 81 and the HCl gas 82 can be supplied into the flue 18 from the injection nozzle 89, based on the gaseous nature of the flue gas 12.

The $NH_3$ gas 81 and the HCl gas 82 are separately supplied from the $NH_3$ gas supplying unit 84 and the HCl gas supplying unit 85, and mixed. Accordingly, based on the balance of the concentrations of NOx and Hg in the flue gas 12 discharged from combustion equipment such as the boiler 11, the feed rates of the $NH_3$ gas 81 and the HCl gas 82 forming the mixed gas 83 can be adjusted. Consequently, it is possible to arbitrarily adjust the supplies of the $NH_3$ gas 81 and the HCl gas 82 in advance, thereby adjusting the required amount of HCl or $NH_3$, and feeding into the flue 18. Because the mixed gas 83 is a gaseous material, the mixed gas 83 can be sprayed into the flue 18 relatively uniformly. Accordingly, it is possible to reduce the fluctuation of concentration distribution of $NH_3$ gas and HCl gas in the flue 18. This is because, as the mercury reduction systems 10A and 10B according to the first and the second embodiments of the present invention, as shown in Figs. 1, 2, and 8, if the liquid materials such as the $NH_4Cl$ solution 14, the $NH_3$ solution 15, and the HCl solution 16 are sprayed into the flue 18 and collide with the structures in the flue 18, the thermal strain is caused by thermal shock, and may damage the structures. A spraying nozzle such as the two-fluid nozzle 55 is installed, so as to avoid the liquid droplets of the $NH_4Cl$ solution 14, the $NH_3$ solution 15, and the HCl solution 16 from colliding with the structures before evaporating. By doing so, a region where the concentrations of $NH_3$ gas and HCl gas generated from the $NH_4Cl$ solution 14, the $NH_3$ solution 15, and the HCl solution 16 become low is produced near the inner wall of the flue 18.

Alternatively, in the mercury reduction system 10C according to the present embodiment, the mixed gas 83 is sprayed into the flue 18 of the boiler 11 as a gaseous material. Accordingly, $NH_3$ gas and HCl gas can be injected into the flue 18 relatively uniformly, thereby eliminating the region where the concentrations of the $NH_3$ gas 81 and the HCl gas 82 become low in the flue 18. Consequently, it is possible to reduce the fluctuation of concentration distribution of the $NH_3$ gas 81 that is a reducing agent, and the HCl gas 82 that is a mercury chlorinating agent. The injection nozzle 89 is installed inside the flue 18, and a part of the $NH_3$ gas feed pipe 86 is inserted into the flue 18. Accordingly, the mixed gas 83 can be heated, and the gaseous states of the $NH_3$ gas 81 and the HCl gas 82 in the mixed gas 83 can be maintained.

The temperature of the injection nozzle 89 and the temperature of the $NH_3$ gas feed pipe 86 inserted into the flue 18 are preferably, for example, equal to or more than 270°C, and more preferably equal to or more than 350°C. This is to prevent $NH_4Cl$ from depositing on the end of the injection nozzle 89 and in the $NH_3$ gas feed pipe 86. If the temperature of the injection nozzle 89 and the temperature of the $NH_3$ gas feed pipe 86 are equal to or more than 350°C, the $NH_3$ gas 81 and the HCl gas 82 can be gasified without fail.

To maintain the gaseous states of the $NH_3$ gas 81 and the HCl gas 82 in the mixed gas 83 without fail, a heater to heat the mixed gas 83 may be included in the $NH_3$ gas feed pipe 86.

In the mercury reduction system 10C according to the present embodiment, the $NH_3$ gas 81 and the HCl gas 82 are used as the gaseous materials. However, the present invention is not limited thereto. For example, gas formed of other hydrogen halide such as hydrogen bromide (HBr) and hydrogen iodide (HI) may be used as a mercury chlorinating agent, instead of the HCl gas 82.

The $NH_3$ gas 81 is used as a reducing agent. However, the present invention is not limited thereto, and any gaseous material that can reduce NOx may be used.

As shown in Fig. 9, the flue gas 12 is fed into the wet desulfurization apparatus 25 through the air heater 22 and the dust collector 23, after NOx is reduced and Hg is oxidized in the flue gas 12, in the reduction denitration apparatus 20. A heat collector may be provided between the air heater 22 and the dust collector 23. HgCl in the flue gas 12 is absorbed by the limestone-gypsum slurry 24 used as an alkali absorbent in the wet desulfurization apparatus 25, and separated and reduced from the flue gas 12. Accordingly, the flue gas 12 is purified. The purified flue gas is discharged from a stack 68 as purified gas 67. In this manner, in the mercury reduction system 10C according to the present embodiment, the mixed gas 83 containing the $NH_3$ gas 81 and the HCl gas 82 is supplied into the flue 18 of the boiler 11. Accordingly, on the denitration catalyst, Hg in the flue gas 12 is oxidized with the HCl gas 82 on the denitration catalyst, and NOx therein is reduced with the $NH_3$ gas 81. By adjusting the proportion of the $NH_3$ gas 81 and the HCl gas 82 in the mixed gas 83, appropriate amounts of the $NH_3$ gas 81 and the HCl gas 82 can be arbitrarily supplied, based on the gaseous nature of the flue gas 12. Because the mixed gas 83 can be supplied into the flue 18 relatively uniformly, it is possible to reduce the fluctuation of concentration distribution of the reducing agent and the mercury chlorinating agent.

INDUSTRIAL APPLICABILITY

In this manner, the mercury reduction system and the mercury reduction method of flue gas containing mercury according to the present invention can simultaneously supply a reducing agent and a mercury chlorinating agent in any proportion to the flue gas, based on the gaseous nature of the flue gas. Accordingly, the mercury reduction system and the mercury reduction method of flue gas containing mercury according to the present invention can be suitably used for the mercury reduction system for treating exhaust gas discharged from a boiler.

EXPLANATIONS OF LETTERS OR NUMERALS

| | |
|---|---|
| 10A to 10C | mercury reduction system |
| 11 | boiler |
| 12 | flue gas |
| 14 | ammonium chloride ($NH_4Cl$) solution |
| 15 | ammonia ($NH_3$) solution |
| 16 | hydrogen chloride (HCl) solution |
| 17 | mixed solution |
| 18 | flue |
| 19A to 19C | chemical supplying unit |
| 20 | reduction denitration apparatus |
| 22 | air heater (APH) |
| 23 | dust collector |
| 24 | limestone-gypsum slurry |
| 25 | wet desulfurization apparatus |
| 31 | ammonium chloride ($NH_4Cl$) powder |
| 32 | silo |
| 33 | blower |
| 34 | air |
| 35 | feeder |
| 36 | $NH_4Cl$ powder feed path |
| 37 | $NH_4Cl$ dissolving tank |
| 38 | water supplying tank |
| 39 | water |
| 40-1 to 40-4 | stirring unit |
| 41, 41-1~41-3 | concentration meter |
| 42 | arithmetic apparatus |
| 43 | $NH_3$ dissolving tank |
| 44 | HCl dissolving tank |
| 45-1 to 45-6 | pump |
| 46 | $NH_4Cl$ solution feed pipe |
| 47 | mixed solution dissolving tank |
| 48 | $NH_3$ solution feed pipe |
| 49 | HCl solution feed pipe |
| 50-1 to 50-6, 88-1, 88-2 | flowmeter |
| 51 | mixed solution feed pipe |
| 52, 56 | air |
| 53 | injection hole |
| 54 | blow pipe |

| 55 | two-fluid nozzle |
| 57, 58 | air feed pipe |
| 59 | feed pump |
| 60, 61 | air supplying unit |
| 62 | space |
| 63, 65 | flange portion |
| 64 | opening |
| 66, 89 | injection nozzle |
| 67 | purified gas |
| 68 | stack |
| 71 | flowmeter |
| 72-1, 72-2 | nitrogen oxide (NOx) concentration meter |
| 73 | mercury (Hg) concentration meter |
| 74 | hydrogen chloride (HCl) concentration meter |
| 81 | $NH_3$ gas |
| 82 | HCl gas |
| 83 | mixed gas |
| 84 | $NH_3$ gas supplying unit |
| 85 | HCl gas supplying unit |
| 86 | $NH_3$ gas feed pipe |
| 87 | HCl gas feed pipe |
| V1 to V7, V11 to V13 | adjusting valve |

**Claims**

1. A mercury content reduction system (10A; 10B) that reduces the content of nitrogen oxide and mercury in flue gas discharged from a boiler (11), the mercury reduction system (10A; 10B) comprising:

 a chemical supplying unit (19A; 19B) that mixes a reducing agent for reducing nitrogen oxide in the flue gas on a denitration catalyst, a mercury chlorinating agent for oxidizing mercury in a presence of hydrogen chloride, and an oxidation-reduction agent for reducing nitrogen oxide in the flue gas on a denitration catalyst and for oxidizing mercury in the presence of hydrogen chloride, all in liquid states, and sprays a mixed solution into a flue of the boiler (11);
 a reduction denitration apparatus (20) that includes a denitration catalyst for reducing nitrogen oxide in the flue gas with ammonia and for oxidizing mercury in the presence of hydrogen chloride; and
 a wet desulfurization apparatus (25) that reduces a concentration of mercury oxidized in the reduction denitration apparatus (20) with an alkali absorbent,
 **characterized in that** the chemical supplying unit (19A; 19B) comprises:

 an $NH_4Cl$ dissolving tank (37) including a stirring unit (40-1) for preparing an $NH_4Cl$ solution (14) at a predetermined concentration;
 an $NH_3$ dissolving tank (43) including a stirring unit (40-2) for preparing an $NH_3$ solution (15) at a constant concentration;
 an HCl dissolving tank (44) including a stirring unit (40-3) for preparing an HCl solution (16) at a constant concentration;
 a mixed solution dissolving tank (47) including a stirring unit (40-4) for preparing the mixed solution (17) from the $NH_4Cl$ solution (14) supplied from the $NH_4Cl$ dissolving tank (37), the $NH_3$ solution (15) supplied from the NH3 dissolving tank (43), and the HCl solution (16) supplied from the HCl dissolving tank (44);
 a plurality of adjusting valves (V2, V3, V4, V5) for adjusting flow rates of the $NH_4Cl$ solution (14), the $NH_3$ solution (15), and the HCl solution (16), and the mixed solution (17), respectively;
 a plurality of flowmeters (50-1, 50-2, 50-3, 50-4) for measuring flow rates of the $NH_4Cl$ solution (14), the $NH_3$ solution (15), and the HCl solution (16), and the mixed solution (17), respectively;
 a flowmeter (71) for measuring a flow rate of the mixed solution (17) sprayed into the flue gas;
 a plurality of NOx concentration meters (72-1, 72-2) provided upstream and downstream of the reduction denitration apparatus (20) for measuring a NOx concentration of the flue gas (12);
 a mercury concentration meter (73) that measures mercury contained in the treatment gas discharged from the reduction denitration apparatus (20);

an arithmetic apparatus (42) configured to control the plurality of adjusting valves (V2, V3, V4, V5) based on the measurements of the flowmeter (71), the plurality of NOx concentration meters (72-1, 72-2), and the mercury concentration meter (73).

2. The mercury content reduction system (10A; 10B) according to claim 1, wherein the chemical supplying unit (19A; 19B) includes

a chemical feed pipe (51) that feeds the liquid materials into a flue in a liquid state,
a blow pipe (54) that is inserted into the flue so as to surround the chemical feed pipe (51), and has an injection hole (53) used to inject air supplied therein into the flue, and
an injection nozzle (66; 89) that is fitted to an end of the chemical feed pipe (51) and through which the liquid materials are injected, and

the liquid materials are sprayed into the flue accompanied with the air.

3. The mercury content reduction system (10A; 10B) according to claim 2, wherein the injection nozzle (66; 89) is a two-fluid nozzle (55) through which the liquid materials and the air for spraying the liquid materials are injected.

4. The mercury content reduction system (10A; 10B) according to claim 1, wherein the chemical supplying unit (19A; 19B) includes

an oxidation-reduction agent feed pipe (46) through which the oxidation-reduction agent is supplied into the flue in a liquid state,
an air feed pipe (57; 58) that is inserted into the flue so as to surround the oxidation-reduction agent feed pipe (46) and through which air for spraying the oxidation-reduction agent is supplied into the flue, and
a two-fluid nozzle (55) that is fixed to an end of the oxidation-reduction agent feed pipe (46) and the air feed pipe (57; 58), and through which the oxidation-reduction agent and the air are injected, wherein

the oxidation-reduction agent is sprayed into the flue accompanied with the air.

5. A mercury content reduction system (10C) that reduces the content of nitrogen oxide and mercury in flue gas discharged from a boiler (11), the mercury reduction system (10C) comprising:

a chemical supplying unit (19C) that mixes a reducing agent for reducing nitrogen oxide in the flue gas on a denitration catalyst, and a mercury chlorinating agent for oxidizing mercury in a presence of hydrogen chloride, all in gaseous states, and inject a mixed gas (83) into a flue of the boiler (11);
a reduction denitration apparatus (20) that includes a denitration catalyst for reducing nitrogen oxide in the flue gas with ammonia and for oxidizing mercury in the presence of hydrogen chloride; and
a wet desulfurization apparatus (25) that reduces a concentration of mercury oxidized in the reduction denitration apparatus (20) with an alkali absorbent,
**characterized in that** the chemical supplying unit (19C) comprises
an $NH_3$ gas feed pipe (86) that supplies the $NH_3$ gas (81) from an $NH_3$ gas supplying unit (84) into the flue (18) ;
an HCl gas feed pipe (87) that connects between an HCl gas supplying unit (85) and the $NH_3$ gas feed pipe (86);
a plurality of adjusting valves (V11, V12, V13) for adjusting flow rates of the $NH_3$ gas (81) and the HCl gas (82), and the mixed gas (83), respectively;
a plurality of flowmeters (88-1, 88-2, 88-3) for measuring flow rates of the $NH_3$ gas (81), the HCl gas (82), and the mixed gas (83), respectively;
a flowmeter (71) for measuring a flow rate of the mixed gas (83) injected into the flue gas;
a plurality of NOx concentration meters (72-1, 72-2) provided upstream and downstream of the reduction denitration apparatus (20) for measuring a NOx concentration of the flue gas (12);
a mercury concentration meter (73) that measures mercury contained in the treatment gas discharged from the reduction denitration apparatus (20);
an arithmetic apparatus (42) configured to control the plurality of adjusting valves (V11, V12, V13) based on the measurements of the flowmeter (71), the plurality of NOx concentration meters (72-1, 72-2), and the mercury concentration meter (73).

6. The mercury content reduction system (10A; 10B; 10C) according to any one of claims 1 to 5, wherein the system is suitable for treating a flue gas having a temperature equal to or more than 320°C and equal to or less than 420°C.

7. A mercury content reduction method using the mercury content reduction system (10A; 10B) according to claim 1 comprising:

a step of chemical supplying for mixing a reducing agent that reduces nitrogen oxide in the flue gas on a denitration catalyst, a mercury chlorinating agent that oxidizes mercury in a presence of hydrogen chloride, and an oxidation-reduction agent that reduces nitrogen oxide in the flue gas on a denitration catalyst and oxidizes mercury in the presence of hydrogen chloride, as in liquid states, and for supplying a resultant mix into a flue of the boiler (11) ;
a step of reduction denitration treating for reducing nitrogen oxide in the flue gas on the denitration catalyst with ammonia and oxidizing mercury in the presence of hydrogen chloride; and
a step of wet desulfurizing for reducing a concentration of mercury oxidized at the step of reduction denitration treating with an alkali absorbent.

8. The mercury content reduction method of flue gas containing mercury according to claim 7, wherein the liquid materials are sprayed with a two-fluid nozzle (55) at the step of chemical supplying.

9. The mercury content reduction method of flue gas containing mercury according to claim 7 or 8, further comprising:

a step of nitrogen oxide concentration measuring that is provided prior to and subsequent to the step of reduction denitration treating, and measures concentration of nitrogen oxide in the flue gas; and
a step of mercury concentration measuring that is provided subsequent to the step of reduction denitration treating, and measures concentration of mercury in the flue gas, wherein
concentrations of the liquid materials in the mixed solution are adjusted based on at least one of the concentration of nitrogen oxide in the flue gas obtained at the step of nitrogen oxide concentration measuring and the concentration of mercury in the flue gas obtained at the step of mercury concentration measuring, or both of them.

10. The mercury content reduction method of flue gas containing mercury according to any one of claims 7 to 9, wherein concentrations of the liquid materials in the mixed solution are measured, and
supplies of the liquid materials are adjusted based on the concentrations of the liquid materials.

11. A mercury content reduction method using the mercury content reduction system (10C) according to claim 5, comprising
a step of chemical supplying for mixing a reducing agent that reduces nitrogen oxide in the flue gas on a denitration catalyst, a mercury chlorinating agent that oxidizes mercury in a presence of hydrogen chloride, all in gaseous states, and for supplying a resultant mix into a flue of the boiler (11);
a step of reduction denitration treating for reducing nitrogen oxide in the flue gas on the denitration catalyst with ammonia and oxidizing mercury in the presence of hydrogen chloride; and
a step of wet desulfurizing for reducing a concentration of mercury oxidized at the step of reduction denitration treating with an alkali absorbent.

**Patentansprüche**

1. Ein System zur Verringerung des Quecksilbergehalts (10A; 10B), das den Gehalt an Stickoxid und Quecksilber in aus einem Kessel (11) abgegebenem Rauchgas verringert, wobei das System zur Verringerung des Quecksilbergehalts (10A; 10B) umfasst:

eine Chemikalienzufuhreinheit (19A; 19B), die ein Reduktionsmittel zum Reduzieren von Stickoxid in dem Rauchgas auf einem Denitrierungskatalysator, ein Quecksilberchlorierungsmittel zum Oxidieren von Quecksilber in Gegenwart von Chlorwasserstoff und ein Oxidations-Reduktions-Mittel zum Reduzieren von Stickoxid in dem Rauchgas auf einem Denitrierungskatalysator und zum Oxidieren von Quecksilber in Gegenwart von Chlorwasserstoff, alle in flüssigen Zuständen, mischt und eine gemischte Lösung in einen Abzug des Kessels (11) einsprüht;
eine Reduktionsdenitrierungsvorrichtung (20), die einen Denitrierungskatalysator zum Reduzieren von Stickoxid in dem Rauchgas mit Ammoniak und zum Oxidieren von Quecksilber in Gegenwart von Chlorwasserstoff enthält; und
eine Nassentschwefelungsvorrichtung (25), die eine Konzentration von Quecksilber, das in der Reduktionsdenitrierungsvorrichtung (20) oxidiert wurde, mit einem alkalischen Absorptionsmittel reduziert,

**dadurch gekennzeichnet, dass** die Chemikalienzufuhreinheit (19A; 19B) umfasst:

einen $NH_4Cl$-Lösebehälter (37), der eine Rühreinheit (40-1) zum Herstellen einer $NH_4Cl$-Lösung (14) mit einer vorbestimmten Konzentration enthält;

einen $NH_3$-Lösebehälter (43), der eine Rühreinheit (40-2) zum Herstellen einer $NH_3$-Lösung (15) mit einer konstanten Konzentration enthält;

einen HCl-Lösebehälter (44), der eine Rühreinheit (40-3) zum Herstellen einer HCl-Lösung (16) mit einer konstanten Konzentration enthält;

einen Lösebehälter für eine gemischte Lösung (47), der eine Rühreinheit (40-4) zum Herstellen der gemischten Lösung (17) aus der $NH_4Cl$-Lösung (14), die aus dem $NH_4Cl$-Lösebehälter (37) zugeführt wird, der $NH_3$-Lösung (15), die aus dem $NH_3$-Lösebehälter (43) zugeführt wird, und der HCl-Lösung (16), die von dem HCl-Lösebehälter (44) zugeführt wird, enthält;

eine Vielzahl von Einstellventilen (V2, V3, V4, V5) zum Einstellen der Durchflussraten der $NH_4Cl$-Lösung (14), der $NH_3$-Lösung (15), der HCl-Lösung (16) beziehungsweise der gemischten Lösung (17);

eine Vielzahl von Durchflussmessgeräten (50-1, 50-2, 50-3, 50-4) zum Messen von Durchflussraten der $NH_4Cl$-Lösung (14), der $NH_3$-Lösung (15), der HCl-Lösung (16) beziehungsweise der gemischten Lösung (17);

ein Durchflussmessgerät (71) zum Messen einer Durchflussrate der gemischten Lösung (17), die in das Rauchgas eingesprüht wird;

eine Vielzahl von NOx-Konzentrationsmessgeräten (72-1, 72-2), die stromaufwärts und stromabwärts der Reduktionsdenitrierungsvorrichtung (20) angebracht sind, zum Messen einer NOx-Konzentration des Rauchgases (12);

ein Quecksilberkonzentrationsmessgerät (73), das Quecksilber misst, das in dem zu behandelnden Gas enthalten ist, das von der Reduktionsdenitrierungsvorrichtung (20) abgegeben wird;

eine arithmetische Vorrichtung (42), die konfiguriert ist, um die Vielzahl von Einstellventilen (V2, V3, V4, V5) basierend auf den Messungen des Durchflussmessgeräts (71), der Vielzahl von NOx-Konzentrationsmessgeräten (72-1, 72-2), und des Quecksilberkonzentrationsmessgeräts (73) zu steuern.

2. Das System zur Verringerung des Quecksilbergehalts (10A; 10B) gemäß Anspruch 1, wobei die Chemikalienzufuhreinheit (19A; 19B) eine Chemikalienzuführrohr (51), dass die flüssigen Materialien in einen Abzug in flüssigem Zustand zuführt,
ein Abblassrohr (54), das so in den Abzug eingesetzt ist, dass es das Chemikalienzuführrohr (51) umgibt, und das ein Einspritzloch (53) aufweist, welches verwendet wird, um darin zugeführte Luft in den Abzug einzuspritzen, und eine Einspritzdüse (66; 89), die an ein Ende des Chemikalienzuführrohrs (51) angepasst ist und durch welches die flüssigen Materialien eingespritzt werden, enthält, und
die flüssigen Materialien werden zusammen mit der Luft in den Abzug eingesprüht.

3. Das System zur Verringerung des Quecksilbergehalts (10A; 10B) gemäß Anspruch 2, wobei die Einspritzdüse (66; 89) eine Zweistoffdüse (55) ist, durch welche die flüssigen Materialien und die Luft zum Einsprühen der flüssigen Materialien eingespritzt werden.

4. Das System zur Verringerung des Quecksilbergehalts (10A; 10B) gemäß Anspruch 1, wobei die Chemikalienzufuhreinheit (19A; 19B) ein Zuführrohr für ein Oxidations-Reduktions-Mittel (46), durch das das Oxidations-Reduktions-Mittel in den Abzug in einem flüssigen Zustand zugeführt wird,
ein Luftzuführrohr (57; 58), das so in den Abzug eingeführt ist, um das Zuführrohr für ein Oxidations-Reduktions-Mittel (46) zu umgeben, und durch welches Luft zum Einsprühen des Oxidations-Reduktions-Mittels in den Abzug zugeführt wird, und
eine Zweistoffdüse (55), die an einem Ende des Zuführrohrs für ein Oxidations-Reduktions-Mittel (46) und dem Luftzuführrohr (57; 58) befestigt ist und durch welches das Oxidations-Reduktions-Mittel und die Luft eingespritzt werden, wobei das Oxidations-Reduktions-Mittel zusammen mit der Luft in den Abzug eingesprüht wird, enthält.

5. Ein System zur Verringerung des Quecksilbergehalts (10C), das den Gehalt an Stickoxid und Quecksilber in aus einem Kessel (11) abgegebenem Rauchgas verringert, wobei das System zur Verringerung des Quecksilbergehalts (10C) umfasst:

eine Chemikalienzufuhreinheit (19C), die ein Reduktionsmittel zum Reduzieren von Stickoxid in dem Rauchgas auf einem Denitrierungskatalysator, und ein Quecksilberchlorierungsmittel zum Oxidieren von Quecksilber in Gegenwart von Chlorwasserstoff, alle in gasförmigen Zuständen, mischt, und ein gemischtes Gas (83) in einen Abzug des Kessels (11) einsprüht;

eine Reduktionsdenitrierungsvorrichtung (20), die einen Denitrierungskatalysator zum Reduzieren von Stickoxid in dem Rauchgas mit Ammoniak und zum Oxidieren von Quecksilber in Gegenwart von Chlorwasserstoff enthält; und

eine Nassentschwefelungsvorrichtung (25), die eine Konzentration von Quecksilber, das in der Reduktionsdenitrierungsvorrichtung (20) oxidiert wurde, mit einem alkalischen Absorptionsmittel reduziert, **dadurch gekennzeichnet, dass** die Chemikalienzufuhreinheit (19C) umfasst:

ein $NH_3$-Gaszuführrohr (86), das das $NH_3$-Gas (81) von einer $NH_3$-Gasversorgungseinheit (84) in den Abzug (18) zuführt;

ein HCl-Gaszuführrohr (87), das eine Verbindung zwischen einer HCl-Gasversorgungseinheit (85) und dem $NH_3$-Gaszuführrohr (86) herstellt;

eine Vielzahl von Einstellventilen (V11, V12, V13) zum Einstellen der Durchflussraten des $NH_3$-Gases (81), des HCl-Gases (82) beziehungsweise des gemischten Gases (83);

eine Vielzahl von Durchflussmessgeräten (88-1, 88-2, 88-3) zum Messen von Durchflussraten des $NH_3$-Gases (81), des HCl-Gases (82) beziehungsweise des gemischten Gases (83);

ein Durchflussmessgerät (71) zum Messen einer Durchflussrate des in das Rauchgas eingespritzten gemischten Gases (83);

eine Vielzahl von NOx-Konzentrationsmessgeräten (72-1, 72-2), die stromaufwärts und stromabwärts der Reduktionsdenitrierungsvorrichtung (20) angebracht sind, zum Messen einer NOx-Konzentration des Rauchgases (12);

ein Quecksilberkonzentrationsmessgerät (73), das Quecksilber misst, das in dem zu behandelnden Gas enthalten ist, das von der Reduktionsdenitrierungsvorrichtung (20) abgegeben wird;

eine arithmetische Vorrichtung (42), die konfiguriert ist, um die Vielzahl von Einstellventilen (V11, V12, V13) basierend auf den Messungen des Durchflussmessgeräts (71), der Vielzahl von NOx-Konzentrationsmessgeräten (72-1, 72-2), und des Quecksilberkonzentrationsmessgeräts (73) zu steuern.

6. Das System zur Verringerung des Quecksilbergehalts (10A; 10B; 10C) gemäß einem der Ansprüche 1 bis 5, wobei das System geeignet ist, ein Rauchgas mit einer Temperatur von gleich oder mehr als 320°C und gleich oder weniger als 420°C zu behandeln.

7. Ein Verfahren zur Verringerung des Quecksilbergehalts unter Verwendung des Systems zur Verringerung des Quecksilbergehalts (10A; 10B) gemäß Anspruch 1, umfassend:

einen Schritt des Chemikalienzuführens zum Mischen eines Reduktionsmittels, das Stickoxid in dem Rauchgas auf einem Denitrierungskatalysator reduziert, eines Quecksilberchlorierungsmittel, das Quecksilber in Gegenwart von Chlorwasserstoff oxidiert, und eines Oxidations-Reduktions-Mittel, das Stickoxid in dem Rauchgas auf einem Denitrierungskatalysator reduziert und das Quecksilber in Gegenwart von Chlorwasserstoff oxidiert, in flüssigen Zuständen, und zum Zuführen des resultierenden Gemisches in einen Abzug des Kessels (11);

einen Schritt der Reduktionsdenitrierungsbehandlung zum Reduzieren von Stickoxid in dem Rauchgas auf dem Denitrierungskatalysator mit Ammoniak und zum Oxidieren von Quecksilber in Gegenwart von Chlorwasserstoff; und

einen Schritt des Nassentschwefelns zum Reduzieren einer Konzentration von Quecksilber, das in dem Schritt der Reduktionsdenitrierungsbehandlung oxidiert wurde, wobei mit einem alkalischen Absorptionsmittel behandelt wird.

8. Das Verfahren zur Verringerung des Quecksilbergehalts für Quecksilber enthaltendes Rauchgas gemäß Anspruch 7, wobei die flüssigen Materialien beim Schritt des Chemikalienzuführens mit einer Zweistoffdüse (55) eingesprüht werden.

9. Das Verfahren zur Verringerung des Quecksilbergehalts für Quecksilber enthaltendes Rauchgas gemäß Anspruch 7 oder 8, ferner umfassend:

einen Schritt zum Messen der Stickoxidkonzentration, der vor und nach dem Schritt der Reduktionsdenitrierungsbehandlung bereitgestellt wird, und bei dem die Konzentration von Stickoxid im Rauchgas gemessen wird; und

einen Schritt zum Messen der Quecksilberkonzentration, der nach dem Schritt der Reduktionsdenitrierungsbehandlung bereitgestellt wird, und bei dem die Konzentration von Quecksilber im Rauchgas gemessen wird, wobei

Konzentrationen der flüssigen Materialien in der gemischten Lösung basierend auf mindestens einer der Konzentration von Stickoxid in dem Rauchgas, das in dem Schritt zum Messen der Stickoxidkonzentration erhalten wurde, und der Konzentration von Quecksilber in dem Rauchgas, das in dem Schritt zum Messen der Quecksilberkonzentration erhalten wurde, oder basierend auf beiden, eingestellt werden.

**10.** Das Verfahren zur Verringerung des Quecksilbergehalts für Quecksilber enthaltendes Rauchgas gemäß einem der Ansprüche 7 bis 9, wobei
Konzentrationen der flüssigen Materialien in der gemischten Lösung gemessen werden, und
die Zufuhren der flüssigen Materialien basierend auf den Konzentrationen der flüssigen Materialien eingestellt werden.

**11.** Ein Verfahren zur Verringerung des Quecksilbergehalts unter Verwendung des Systems zur Verringerung des Quecksilbergehalts (10C) gemäß Anspruch 5, umfassend einen Schritt des Chemikalienzuführens zum Mischen eines Reduktionsmittels, das Stickoxid in dem Rauchgas auf einem Denitrierungskatalysator reduziert, eines Quecksilberchlorierungsmittel zum Oxidieren von Quecksilber in Gegenwart von Chlorwasserstoff, alle in gasförmigen Zuständen, und zum Zuführen des resultierenden Gemisches in einen Abzug des Kessels (11); und
einen Schritt der Reduktionsdenitrierungsbehandlung zum Reduzieren von Stickoxid in dem Rauchgas auf dem Denitrierungskatalysator mit Ammoniak und zum Oxidieren von Quecksilber in Gegenwart von Chlorwasserstoff; und
einen Schritt des Nassentschwefelns zum Reduzieren einer Konzentration von Quecksilber, das in dem Schritt der Reduktionsdenitrierungsbehandlung oxidiert wurde, wobei mit einem alkalischen Absorptionsmittel behandelt wird.

## Revendications

**1.** Système de réduction de teneur en mercure (10A ; 10B) qui réduit la teneur en oxydes d'azote et en mercure dans les gaz de combustion rejetés par une chaudière (11), le système de réduction de mercure (10A ; 10B) comprenant :

une unité de fourniture de produits chimiques (19A ; 19B) qui mélange un agent réducteur pour réduire les oxydes d'azote dans les gaz de combustion sur un catalyseur de dénitrification, un agent de chloration du mercure pour oxyder le mercure en présence de chlorure d'hydrogène, et un agent d'oxydoréduction pour réduire les oxydes d'azote dans les gaz de combustion sur un catalyseur de dénitrification et pour oxyder le mercure en présence de chlorure d'hydrogène, tous à l'état liquide, et qui pulvérise une solution mixte dans un conduit de la chaudière (11) ;
un dispositif de dénitrification par réduction (20) qui comprend un catalyseur de dénitrification pour réduire les oxydes d'azote dans le gaz de combustion avec de l'ammoniac et pour oxyder le mercure en présence de chlorure d'hydrogène ; et
un dispositif de désulfuration par voie humide (25) qui réduit la concentration de mercure oxydé dans le dispositif de dénitrification par réduction (20) avec un absorbant alcalin,
**caractérisé en ce que** l'unité de fourniture de produits chimiques (19A ; 19B) comprend :

une cuve de dissolution de $NH_4Cl$ (37) comprenant une unité d'agitation (40-1) pour préparer une solution de $NH_4Cl$ (14) à une concentration prédéterminée ;
une cuve de dissolution de $NH_3$ (43) comprenant une unité d'agitation (40-2) pour préparer une solution de $NH_3$ (15) à une concentration constante ;
une cuve de dissolution de HCl (44) comprenant une unité d'agitation (40-3) pour préparer une solution de HCl (16) à une concentration constante ;
une cuve de dissolution de solution mixte (47) comprenant une unité d'agitation (40-4) pour préparer la solution mixte (17) à partir de la solution de $NH_4Cl$ (14) fournie à partir de la cuve de dissolution de $NH_4Cl$ (37), de la solution de $NH_3$ (15) fournie à partir de la cuve de dissolution de $NH_3$ (43), et de la solution de HCl (16) fournie à partir de la cuve de dissolution de HCl (44) ;
une pluralité de vannes d'ajustement (V2, V3, V4, V5) pour ajuster les débits de la solution de $NH_4Cl$ (14), de la solution de $NH_3$ (15), de la solution de HCl (16), et de la solution mixte (17), respectivement ;
une pluralité de débitmètres (50-1, 50-2, 50-3, 50-4) pour mesurer les débits de la solution de $NH_4Cl$ (14), de la solution de $NH_3$ (15), de la solution de HCl (16), et de la solution mixte (17), respectivement ;
un débitmètre (71) pour mesurer le débit de la solution mixte (17) pulvérisée dans les gaz de combustion;
une pluralité de dispositifs de mesure de concentration de $NO_x$ (72-1, 72-2) disposés en amont et en aval du dispositif de dénitrification par réduction (20) pour mesurer la concentration de $NO_x$ dans les gaz de combustion (12) ;

un dispositif de mesure de concentration de mercure (73) qui mesure le mercure contenu dans le gaz de traitement rejeté par le dispositif de dénitrification par réduction (20) ;

un dispositif arithmétique (42) configuré pour commander la pluralité de vannes d'ajustement (V2, V3, V4, V5) sur la base des mesures du débitmètre (71), de la pluralité de dispositifs de mesure de concentration de NOx (72-1, 72-2) et du dispositif de mesure de concentration de mercure (73).

2. Système de réduction de teneur en mercure (10A ; 10B) selon la revendication 1, dans lequel l'unité de fourniture de produits chimiques (19A ; 19B) comprend

un tuyau d'alimentation en produits chimiques (51) qui introduit les matériaux chimiques dans un conduit à l'état liquide,

un tuyau d'insufflation (54) qui est inséré dans le conduit de façon à entourer le tuyau d'alimentation en produits chimiques (51), et qui a un trou d'injection (53) utilisé pour injecter dans le conduit l'air introduit dans celui-ci, et

une buse d'injection (66 ; 89) qui est assujettie à une extrémité du tuyau d'alimentation en produits chimiques (51) et par l'intermédiaire de laquelle les matériaux liquides sont injectés, et

les matériaux liquides sont pulvérisés dans le conduit en étant accompagnés de l'air.

3. Système de réduction de teneur en mercure (10A ; 10B) selon la revendication 2, dans lequel la buse d'injection (66 ; 89) est une buse à deux fluides (55) par l'intermédiaire de laquelle les matériaux liquides et l'air pour pulvériser les matériaux liquides sont injectés.

4. Système de réduction de teneur en mercure (10A ; 10B) selon la revendication 1, dans lequel l'unité de fourniture de produits chimiques (19A ; 19B) comprend

un tuyau d'alimentation en agent d'oxydoréduction (46) par l'intermédiaire duquel l'agent d'oxydoréduction est introduit dans le conduit à l'état liquide,

un tuyau d'alimentation en air (57 ; 58) qui est inséré dans le conduit de façon à entourer le tuyau d'alimentation en agent d'oxydoréduction (46) et par l'intermédiaire duquel de l'air pour pulvériser l'agent d'oxydoréduction est introduit dans le conduit, et

une buse à deux fluides (55) qui est fixée à une extrémité du tuyau d'alimentation en agent d'oxydoréduction (46) et du tuyau d'alimentation en air (57 ; 58), et par l'intermédiaire de laquelle l'agent d'oxydoréduction et l'air sont injectés, dans lequel

l'agent d'oxydoréduction est pulvérisé dans le conduit en étant accompagné de l'air.

5. Système de réduction de teneur en mercure (10C) qui réduit la teneur en oxydes d'azote et en mercure dans les gaz de combustion rejetés par une chaudière (11), le système de réduction de mercure (10C) comprenant :

une unité de fourniture de produits chimiques (19C) qui mélange un agent réducteur pour réduire les oxydes d'azote dans les gaz de combustion sur un catalyseur de dénitrification, et un agent de chloration du mercure pour oxyder le mercure en présence de chlorure d'hydrogène, tous à l'état gazeux, et qui injecte un mélange gazeux (83) dans un conduit de la chaudière (11) ;

un dispositif de dénitrification par réduction (20) qui comprend un catalyseur de dénitrification pour réduire les oxydes d'azote dans le gaz de combustion avec de l'ammoniac et pour oxyder le mercure en présence de chlorure d'hydrogène ; et

un dispositif de désulfuration par voie humide (25) qui réduit la concentration de mercure oxydé dans le dispositif de dénitrification par réduction (20) avec un absorbant alcalin,

**caractérisé en ce que** l'unité de fourniture de produits chimiques (19C) comprend

un tuyau d'alimentation en $NH_3$ gazeux (86) qui introduit le $NH_3$ gazeux (81) à partir d'une unité de fourniture de $NH_3$ gazeux (84) dans le conduit (18) ;

un tuyau d'alimentation en HCl gazeux (87) qui connecte entre eux une unité de fourniture de HCl gazeux (85) et le tuyau d'alimentation en $NH_3$ gazeux (86) ;

une pluralité de vannes d'ajustement (V11, V12, V13) pour ajuster les débits du $NH_3$ gazeux (81), du HCl gazeux (82) et du mélange gazeux (83) respectivement ;

une pluralité de débitmètres (88-1, 88-2, 88-3) pour mesurer les débits du $NH_3$ gazeux (81), du HCl gazeux (82) et du mélange gazeux (83) respectivement ;

un débitmètre (71) pour mesurer le débit du mélange gazeux (83) injecté dans les gaz de combustion;

une pluralité de dispositifs de mesure de concentration de $NO_x$ (72-1, 72-2) disposés en amont et en aval du dispositif de dénitrification par réduction (20) pour mesurer la concentration de $NO_x$ dans les gaz de combustion (12) ;

un dispositif de mesure de concentration de mercure (73) qui mesure le mercure contenu dans le gaz de traitement rejeté par le dispositif de dénitrification par réduction (20) ;

un dispositif arithmétique (42) configuré pour commander la pluralité de vannes d'ajustement (V11, V12, V13) sur la base des mesures du débitmètre (71), de la pluralité de dispositifs de mesure de concentration de NOx (72-1, 72-2) et du dispositif de mesure de concentration de mercure (73).

6. Système de réduction de teneur en mercure (10A ; 10B ; 10C) selon l'une quelconque des revendications 1 à 5, lequel système convient pour le traitement de gaz de combustion ayant une température égale ou supérieure à 320°C et égale ou inférieure à 420°C.

7. Procédé de réduction de teneur en mercure utilisant le système de réduction de teneur en mercure (10A ; 10B) selon la revendication 1, comprenant :

une étape de fourniture de produits chimiques pour mélanger un agent réducteur qui réduit les oxydes d'azote dans les gaz de combustion sur un catalyseur de dénitrification, un agent de chloration du mercure qui oxyde le mercure en présence de chlorure d'hydrogène, et un agent d'oxydoréduction qui réduit les oxydes d'azote dans les gaz de combustion sur un catalyseur de dénitrification et oxyde le mercure en présence de chlorure d'hydrogène, à l'état liquide, et pour fournir un mélange résultant dans un conduit de la chaudière (11) ;

une étape de traitement de dénitrification par réduction pour réduire les oxydes d'azote dans les gaz de combustion sur le catalyseur de dénitrification avec de l'ammoniac et pour oxyder le mercure en présence de chlorure d'hydrogène ; et

une étape de désulfuration par voie humide pour réduire la concentration de mercure oxydé dans l'étape de traitement de dénitrification par réduction avec un absorbant alcalin.

8. Procédé de réduction de teneur en mercure de gaz de combustion contenant du mercure selon la revendication 7, dans lequel les matériaux liquides sont pulvérisés avec une buse à deux fluides (55) dans l'étape de fourniture de produits chimiques.

9. Procédé de réduction de teneur en mercure de gaz de combustion contenant du mercure selon la revendication 7 ou 8, comprenant en outre :

une étape de mesure de concentration d'oxydes d'azote qui a lieu avant et après l'étape de traitement de dénitrification par réduction, et qui mesure la concentration des oxydes d'azote dans les gaz de combustion; et

une étape de mesure de concentration de mercure qui a lieu après l'étape de traitement de dénitrification par réduction, et qui mesure la concentration de mercure dans les gaz de combustion, dans lequel les concentrations des matériaux liquides dans la solution mixte sont ajustées sur la base d'au moins l'une parmi la concentration d'oxydes d'azote dans les gaz de combustion, obtenue dans l'étape de mesure de concentration d'oxydes d'azote, et la concentration de mercure dans les gaz de combustion, obtenue dans l'étape de mesure de concentration de mercure, ou les deux.

10. Procédé de réduction de teneur en mercure de gaz de combustion contenant du mercure selon l'une quelconque des revendications 7 à 9, dans lequel

les concentrations des matériaux liquides dans la solution mixte sont mesurées, et

les fournitures des matériaux liquides sont ajustées sur la base des concentrations des matériaux liquides.

11. Procédé de réduction de teneur en mercure utilisant le système de réduction de teneur en mercure (10C) selon la revendication 5, comprenant

une étape de fourniture de produits chimiques pour mélanger un agent réducteur qui réduit les oxydes d'azote dans les gaz de combustion sur un catalyseur de dénitrification, un agent de chloration du mercure qui oxyde le mercure en présence de chlorure d'hydrogène, tous à l'état gazeux, et pour fournir un mélange résultant dans un conduit de la chaudière (11) ;

une étape de traitement de dénitrification par réduction pour réduire les oxydes d'azote dans les gaz de combustion sur le catalyseur de dénitrification avec de l'ammoniac et pour oxyder le mercure en présence de chlorure d'hydrogène ; et

une étape de désulfuration par voie humide pour réduire la concentration de mercure oxydé dans l'étape de traitement de dénitrification par réduction avec un absorbant alcalin.

FIG.1

# FIG.2

10A

EP 2 444 144 B1

# FIG.3

# FIG.4

$$NH_4Cl \rightarrow NH_3 + HCl$$

55

12

54

$$NH_4Cl \rightarrow NH_3 + HCl$$

55

54

64
64a
65
63

18

64
64a
65
63

58

58

57A
51

57A
51

# FIG.5

$$NH_4Cl \rightarrow NH_3 + HCl$$

# FIG.6

$$NH_4Cl \rightarrow NH_3 + HCl$$

53

62

66

54

51

52    14    52

# FIG.7

$$NH_4Cl \rightarrow NH_3 + HCl$$

# FIG.8

EP 2 444 144 B1

# FIG.9

# FIG.10

EP 2 444 144 B1

# FIG.11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10230137 A
- US 20030235525 A
- US 20070202020 A